# EUROPÄISCHE PATENTSCHRIFT

(11) **EP 2 887 039 B1**
(45) Veröffentlichungstag und Bekanntmachung des Hinweises auf die Patenterteilung: **02.08.2017**
(21) Anmeldenummer: 14003645.0
(22) Anmeldetag: 28.10.2014
(51) Int. Cl.: G01L 1/00, G01M 99/00, G01N 3/00, G01L 1/02

(54) **Vorrichtung und Verfahren zum Messen des Kompressionsdruckes von Kompressionsstrümpfen und Kompressionsbandagen**
Device and method for measuring the compression pressure of compression stockings and compression bandages
Dispositif et procédé de mesure de la pression de contention de bas de contention et bandages de contention

(30) Priorität: 18.12.2013 DE 102013021619
(43) Veröffentlichungstag der Anmeldung: 24.06.2015
(73) Patentinhaber: Peter Müller GmbH, 72461 Albstadt (DE)
(72) Erfinder: Miklosovic, Miroslav, 70597 Stuttgart (DE); Dennerlein, Florian, 71083 Herrenberg (DE); Schwarz, Oliver, 70499 Stuttgart (DE); Müller, Markus, 72461 Albstadt (DE)
(74) Vertreter: Thum, Bernhard

(56) Entgegenhaltungen:
- EP-A1- 1 703 269
- DE-A1- 3 132 557
- US-A- 3 503 257
- US-A- 3 975 956
- Florian Girmond: "Prüfung des Kompressionsverhaltens von medizinischen Kompressionsstrümpfen und ähnlichen Produkten mit dem Kompressionsprüfgerät HOSY Hohenstein Institute -Competence in Textiles", Hohenstein Istitute, 1. März 2010 (2010-03-01), XP055188697, Gefunden im Internet: URL:http://www.hohenstein.de/media/downloa ds/CT_DE_Pruefung_Kompressionsverhalten_HO SY_mail.pdf [gefunden am 2015-05-11]

## Beschreibung

Die vorliegende Erfindung betrifft eine Vorrichtung und ein Verfahren zum Messen des Kompressionsdruckes von Kompressionsstrümpfen und Kompressionsbandagen.

Kompressionsstrümpfe und Kompressionsbandagen werden bekanntermaßen dazu verwendet, stabilisierend oder zu therapeutischen Zwecken einen vorbestimmten Druck auf Körperpartien eines Patienten auszuüben. Hierzu werden beispielsweise schlauchförmige Kompressionsbandagen mit geschlossenem Querschnittsprofil verwendet, die eine Körperpartie eines Patienten, beispielsweise ein Knie, zumindest abschnittsweise vollständig umgeben. Ebenso können neuartigere Kompressionsbandagen ein zunächst offenes, bspw. C-förmiges Querschnittsprofil aufweisen und je nach zu erzeugendem Druck in einem bestimmten Maß geschlossen werden, d.h. auf bestimmte Querschnittsabmessungen eingestellt werden. Sämtlichen dieser Varianten ist gemein, dass sie Querschnittsabmessungen aufweisen oder auf bestimmte Querschnittsabmessungen einstellbar sind, die diejenigen der zu behandelnden Körperpartie zunächst unterschreiten. Bei einem Anlegen an die Körperpartie wird die Kompressionsbandage daher unter Ausübung eines entsprechenden kompressiven Gegendruckes auf die Querschnittsabmessungen der zu behandelnden Körperpartie elastisch gedehnt bzw. aufgeweitet.

Dabei ist bezüglich der Querschnittsabmessungen aus praktischer Sicht insbesondere der sich bei einem gewünschten Kompressionsdruck einstellende Umfang des Strumpfes bzw. der Bandage von Interesse. So wird beispielsweise vor Anlegen einer Kompressionsbandage an einem Bein oder Arm eines Patienten der Umfang in einem oder mehreren Bereichen des entsprechenden Körperteils erfasst. In Abhängigkeit des gemessenen Umfanges wird anschließend eine Kompressionsbandage patientenindividuell ausgewählt oder hergestellt, die bei einem Einnehmen bzw. elastischen Aufweiten auf einen solchen Umfang einen gewünschten Druck auf das entsprechende Körperteil ausübt. Dabei stellt der ausgeübte Kompressionsdruck die zum Erzielen einer gewünschten stabilisierenden oder therapeutischen Wirkung maßgebliche Zielgröße dar. Es ist daher allgemein erforderlich, einen Zusammenhang zwischen eingenommenen Querschnittsabmessungen einer Kompressionsbandage und dabei ausgeübten Kompressionsdrücken vorab zu bestimmen. Da das Kompressionsverhalten unter anderem von den Ausgangsquerschnittsabmessungen einer Kompressionsbandage, den verwendeten Materialien der Bandage, deren Form oder etwaigen zusätzlich darin eingesetzten Silikonstützkörper beeinflusst wird, ist dieser Zusammenhang prinzipiell vorab für eine jede Art von verwendeter Kompressionsbandage zu ermitteln. Aus dem Stand der Technik ist hierzu insbesondere ein von dem Hohenstein-Instituten mit Sitz in Bönnigheim, Deutschland, entwickeltes sogenanntes HOSY-Verfahren (HOhenstein-SYstem) bekannt. Dabei werden Kompressionsstrümpfe oder Kompressionsbandagen zwischen mehreren nebeneinander angeordneten Zugprüfgeräten in weitestgehend flächiger Konfiguration eingespannt und unter Aufbringen einer einaxialen Belastung durch die Zugprüfgeräte um ein vorbestimmtes Maß gedehnt. Bei der Vermessung von Kompressionsbandagen kann dies gegebenenfalls nur durch irreversibles Aufschneiden der Bandage erreicht werden. Dabei sind die Zugprüfgeräte entlang der Längsachsen der eingespannten Kompressionsbandage angeordnet und dehnen diese in im Wesentlichen senkrechten Richtungen dazu. Dies dient der Modellierung einer Dehnung der Bandage in Umfangsrichtung. Mittels der Zugprüfgeräte können so in bekannter Weise Kraft-Dehnungs-Charakteristiken des eingespannten flächigen Kompressionsbandagenmaterials entlang dessen Längsachse ermittelt werden. Die entsprechenden Messergebnisse werden anschließend mathematisch in einen Zusammenhang zwischen einem eingenommen Umfang einer Kompressionsbandage und dem dabei ausgeübten Kompressionsdruck umgerechnet.
Es hat sich jedoch gezeigt, dass neben den mit dem flächigen axialen Vermessen verbundenen Nachteilen mit diesem Messsystem und -verfahren keine ausreichende Genauigkeit bei der Ermittlung des gesuchten Zusammenhangs erreicht werden kann.
Das Dokument US 3 503 257 A offenbart eine Messvorrichtung, bei der eine Kompressionsbandage an einer beinförmigen Form angeordnet wird. Die beinförmige Form weist mehrere Drucksensoren auf, die den von der Kompressionsbandage erzeugten Kompressionsdruck erfassen können.
Es ist daher Aufgabe der vorliegenden Erfindung, eine Kompressionsmessvorrichtung und ein Kompressionsmessverfahren zum Messen des Kompressionsdruckes von Kompressionsstrümpfen oder Kompressionsbandagen bereitzustellen, mit denen der Zusammenhang zwischen den tatsächlich ausgeübten Kompressionsdrücken eines Kompressionsstrumpfes oder einer Kompressionsbandage und ihren veränderlichen Querschnittsabmessungen mit einer höheren Genauigkeit ermittelt werden kann. Diese Aufgabe wird durch eine Vorrichtung zum Messen des Kompressionsdruckes von Kompressionsstrümpfen oder Kompressionsbandagen nach Anspruch 1 gelöst. Bezüglich des aus dem Stand der Technik bekannten HOSY-Messsystems haben die Erfinder erkannt, dass die Kompressionsstrümpfe bzw. Kompressionsbandagen durch Einspannen in die Zugprüfgeräte als weitestgehend flächige Elemente vermessen und lediglich einaxial, d.h. praxisfern, belastet werden. Am Patienten nehmen die Strümpfe bzw. Bandagen hingegen eine gewölbte Form an und werden patientenspezifisch weitaus komplexer gedehnt und belastet. Ferner werden die Kompressionsbandagen bei dem bekannten System in ihren Randbereichen in Zugprüfgeräte eingespannt, wodurch diese Randbereiche bzw. deren Einflüsse nicht von der Messung korrekt erfassbar sind. Gleiches gilt für Bereiche der Kompressionsbandage, die in Längsachsenrichtung betrachtet zwischen zwei Zugprüfgeräten angeordnet sind und somit keine direkte Belastung erfahren. Bei der Lösung gemäß Dokument US 3 503 257 A mangelt es an Möglichkeiten, die relevanten Querschnittsabmessungen flexibel verändern und vermessen zu können.
Die erfindungsgemäße Vorrichtung ermöglicht es hingegen, dass die Kompressionsbandagen nahezu gleichartig wie bei einem Anordnen an einer Körperpartie des Patienten belastbar und deformierbar sind. Anstatt wie bisher lediglich als flächige Elemente unter einaxialer Belastung vermessen zu werden, ist es erfindungsgemäß vorgesehen, die Kompressionsbandagen gemeinsam mit einem Expansionskörper zu deformieren. Dabei ist der Expansionskörper analog zu den Kompressionsbandagen in seinen Querschnittsabmessungen variierbar und dazu ausgebildet, diese Querschnittsvariationen im Rahmen gemeinsamer Expansionen und Kompressionen auf eine Kompressionsbandage zu übertragen. Bildlich gesprochen können mit dem Expansionskörper also die an Körperpartien tatsächlich vorliegenden Querschnittsabmessungen simuliert, vollständig auf eine zu vermessenden Kompressionsbandage übertragen und schließlich unmittelbar messtechnisch erfasst werden. Die Deformation der Kompressionsbandagen entspricht somit nahezu derjenigen, die sie bei Anlegen an eine Körperpartie mit der entsprechenden Querschnittsabmessung erfährt. Dies erhöht die Aussagekraft der ermittelten Messergebnisse erheblich.

Bei der erfindungsgemäßen Vorrichtung ist dabei zunächst vorgesehen, dass wahlweise ein konkreter Betrag für eine zu erzeugende Expansionskraft als Steuergröße oder ein konkreter Betrag für die veränderlichen Querschnittsabmessungen vorgegeben wird. Anschließend wird die mittels der Expansionsanordnung aufgebrachte Expansionskraft so lange variiert, bis die entsprechend gewählte Steuergröße den gewünschten Betrag annimmt. Daraufhin wird die jeweils andere Größe von Expansionskraft und veränderlichen Querschnittsabmessungen zum Ermitteln des gesuchten Zusammenhangs bestimmt. Beispielsweise kann also vorgesehen sein, dass konkrete Werte für die veränderlichen Querschnittsabmessungen vorgegeben werden, die mittels der Messanordnung kontinuierlich überwacht werden. In diesem Fall wird die Expansionskraft so lange variiert, bis sich die gewünschten veränderlichen Querschnittsabmessungen eingestellt haben. Daraufhin wird zur Ermittlung des gesuchten Zusammenhangs die bei diesen Querschnittsabmessungen vorherrschende Expansionskraft erfasst und zugeordnet.

Die mittels der Messanordnung zu erfassenden relevanten Querschnittsabmessungen können dabei je nach Art der verwandten Kompressionsbandage oder der erforderlichen Genauigkeit unterschiedlich gewählt sein. So kann es beispielsweise ausreichend sein, in Abhängigkeit von der bei der gemeinsamen Verformung von Expansionskörper und Kompressionsbandage eingenommenen Querschnittsform lediglich eine Mindestanzahl von Querschnittsabmessungen zu erfassen. Bei Annahme einer nahezu kreisförmigen Querschnittsform kann also bspw. lediglich der Radius erfasst werden, bei ovalen Querschnitten die Abmessungen der Haupt- oder weiterer Querachsen, usw. Um die Aussagekraft des ermittelten Zusammenhangs zu erhöhen, kann aus diesen erfassten Querschnittsabmessungen jeweils der vorliegende Umfang des Querschnitts berechnet werden. Alternativ dazu kann der Umfang auch direkt von der Messanordnung als die relevante, veränderliche Querschnittsabmessung erfasst werden, bspw. durch Ermitteln von Abständen zwischen mehreren, auf den Umfangsflächen von Expansionskörper und/oder Kompressionsbandage liegenden Punkten.

Es versteht sich, dass die Querschnittsabmessungen dabei wahlweise an dem Expansionskörper und/oder der Kompressionsbandage erfasst werden können. In Kenntnis der jeweiligen Materialstärken können die Querschnittsabmessungen anschließend in einander umgerechnet werden. Dies kann zur Verbesserung der Genauigkeit auch unter Berücksichtigung von vorab ermittelten, in Abhängigkeit der Expansionskraft veränderlichen Eigenschaften der Materialstärken erfolgen.

In diesem Zusammenhang kann die Messanordnung die veränderlichen Querschnittsabmessungen allgemein von außerhalb des Expansionskörpers erfassen oder innerhalb von diesem angeordnet sein. Dabei kann die Messanordnung allgemein jegliches zum Erfassen der relevanten Querschnittsabmessungen geeignete Messprinzip verwenden, beispielsweise optische, mechanische oder kapazitive/induktive Abstandsmesssensoren oder Dehnmessstreifen, die auf den Umfangsflächen von Expansionskörper und/oder zu vermessender Kompressionsbandage angeordnet sind.

Als Expansionskörper eignet sich prinzipiell jegliche Anordnung, an der eine Kompressionsbandage positioniert werden kann und die unter Einwirken einer von einer entsprechenden Expansionsanordnung aufgebrachten Expansionskraft hinsichtlich ihrer Querschnittsabmessungen variiert werden kann. Geeignet ist beispielsweise ein dichtend angebrachter, durch Aufblasen expandierbarer Silikonschlauch.

Ähnlich wie im Falle eines etwaigen Umrechnens der ermittelten Querschnittsabmessungen in den Umfang des Querschnittes, kann zur Erhöhung der Aussagekraft der Messergebnisse vorgesehen sein, die aufgebrachte Expansionskraft in bekannter Weise in einen auf den Expansionskörper bzw. die Kompressionsbandage einwirkenden Expansionsdruck umzurechnen. Im statischen Gleichgewicht entspricht dieser Expansionsdruck im Wesentlichen dem von der vermessenen Kompressionsbandage ausgeübten Kompressions- bzw. Gegendruck. Zur Verbesserung der Genauigkeit kann ferner berücksichtigt werden, dass der Expansionskörper in Abhängigkeit des Expansionsdrucks ebenfalls eine entsprechende Gegenkraft bzw. einen Gegendruck erzeugt, bspw. in Folge zunehmender Materialdehnung bei Aufblasen eines Silikonschlauchs. Dieser Gegendruck kann vorab durch eine Vermessung des Zusammenhangs von aufgebrachten Expansionskräften und sich einstellenden Querschnittsabmessungen des Expansionskörpers ohne daran angebrachter Kompressionsbandage ermittelt werden. Der von der Kompressionsbandage tatsächlich ausgeübte Gegendruck kann im statischen Gleichgewicht folglich als der aufgebrachte Expansionsdruck abzüglich des vom Expansionskörper erzeugten Gegendrucks bestimmt werden. Wie nachfolgend noch ausführlicher beschrieben, kann die Expansionskraft auch von vorneherein in Form eines entsprechenden auf den Expansionskörper einwirkenden Expansionsdruckes aufgebracht werden.

Bei einer Weiterbildung der Erfindung ist vorgesehen, dass die Vorrichtung die Expansionskraft als Steuergröße verwendet und mittels der Messanordnung die bei einer bestimmten Expansionskraft vorliegenden Querschnittsabmessungen ermittelt. Das definierte Einstellen einer vorherrschenden Expansionskraft kann allgemein besonders schnell und einfach sowie mit hoher Genauigkeit erfolgen. Dies verbessert die Präzision und die Schnelligkeit der Vorrichtung. Nach Aufbringen der vorgegebenen Expansionskraft werden anschließend die dabei vorliegenden Querschnittsabmessungen mittels der Messanordnung erfasst.

Bei der Erfindung ist ferner vorgesehen, dass die Expansionsanordnung dazu ausgebildet ist, zum Erzeugen von Expansionskräften ein innerhalb des Expansionskörpers vorherrschendes Druckniveau einzustellen. Dies betrifft auch das nachfolgend erläuterte Einstellen von Expansionskräften gemäß dem erfindungsgemäßen Verfahren. Es hat sich gezeigt, dass das Einstellen eines entsprechenden Druckniveaus besonders geeignet zur Ermittlung des Kompressionsdruckes der Kompressionsbandagen ist. Dies ist zunächst darin begrün-det, dass die zu vermessenden Kompressionsbandagen durch den Expansionskörper bei einer derartigen Variante besonders gleichmäßig deformiert werden. Weiterhin sind keine Umrechnungen von einwirkenden Expansionskräften in die von den Kompressionsbandagen aufgebrachten Kompressionsdrücke notwendig. Vielmehr entspricht der von der Expansionsanordnung eingestellte Druck im statischen Gleichge-wicht im Wesentlichen dem von den Kompressionsbandagen erzeugten Kompressionsdruck. Schließlich können derartige Druckniveaus relativ schnell und präzise über entsprechende Steuerungen einer Ventil- und Druckquellenanordnung eingestellt werden.

In diesem Zusammenhang kann erfindungsgemäß ferner vorgesehen sein, dass der Expansionskörper mit einem gasförmigen Medium befüllbar ist und die Expansionsanordnung dazu ausgebildet ist, den Druck dieses Mediums einzustellen. Das Verwenden eines gasförmigen Mediums ermöglicht einen besonders zuverlässigen Betrieb der Expansionsanordnung, da die Handhabung pneumatischer Systeme einfach ist und beispielsweise etwaige Leckagen des Expansionskörpers weniger kritisch sind, als bei Verwenden eines fluidischen Mediums zur Befüllung.

Bei einer Weiterbildung der Erfindung ist vorgesehen, dass die Messanordnung dazu ausgebildet ist, zumindest einen radialen Abstand zwischen der zentralen Längsachse und einem Punkt auf einer Umfangsfläche des Expansionskörpers und/oder einer daran angeordneten Kompressionsbandage zu ermitteln. Zum Ermitteln des radialen Abstandes können prinzipiell sämtliche aus dem Stand der Technik bekannte Abstandsmessprinzipien innerhalb der Messanordnung verwendet werden. Dazu zählen insbesondere optische Abstandsmessprinzipien, wie die Verwendung von Laser- und Infrarotsensoren, sowie TOF-Kamerasysteme (time of flight) oder ähnlichen bildverarbeitungsbasierte Messprinzipien. Ferner können mechanische Anordnungen unter Verwendung von Dehnmessstreifen, Potentiometern etc. verwendet werden.

Je nachdem, ob die Messanordnung innerhalb des Expansionskörpers oder außerhalb von diesem angeordnet ist, kann sie dazu ausgebildet sein, den radialen Abstand zu einer Innenumfangsfläche des Expansionskörpers zu ermitteln, oder aber den radialen Abstand einer Außenumfangsfläche des Expansionskörpers und/oder einer Außenumfangsfläche einer daran angeordneten Kompressionsbandage. Wie vorstehend beschrieben, können die erfassten Messwerte in Kenntnis der jeweiligen Materialstärken dabei auch ineinander umgerechnet werden. Weiterhin versteht es sich, dass in Kenntnis der Relativposition von Messanordnung und zentraler Längsachse ebenfalls eine Umrechnung des erfassten Abstandes zu einem Abstand relativ zur zentralen Längsachse erfolgen kann. Aus einem solchen auf die Längsachse bezogenen Abstandsmesswert kann beispielsweise direkt auf einen vorliegenden Radius oder andere Querschnittsgrößen von Expansionskörper oder vermessener Kompressionsbandage geschlossen werden.

In diesem Zusammenhang kann erfindungsgemäß weiterhin vorgesehen sein, dass die Messanordnung dazu ausgebildet ist, innerhalb wenigstens einer Querschnittsebene eine Mehrzahl von radialen Abständen entlang des Umfangs des Expansionskörpers zu ermitteln, wobei die Vorrichtung dazu ausgebildet ist, aus dieser Mehrzahl den Umfang des Expansionskörpers und/oder einer daran angeordneten Kompressionsbandage zu berechnen. Anstatt also lediglich eine minimale Anzahl von veränderlichen Querschnittsabmessungen zu erfassen, beispielweise einen Radius oder die veränderlichen Abmessungen eines ovalen Querschnitts, und daraus auf einen vorliegenden Umfang zu schließen, wird der Umfang bei dieser Weiterbildung durch Erfassen einzelner Punkte auf den Umfangsflächen direkt ermittelt. Die Berechnung des Umfangs kann dabei beispielsweise durch Addition der Abstände zwischen den bezüglich ihrer radialen Abstände vermessenen Punkten erfolgen.

In diesem Zusammenhang kann erfindungsgemäß ferner vorgesehen sein, dass zum Berechnen des Umfangs segmentweise zumindest eine Teillänge eines Kreisbogens berechnet wird, der von wenigstens drei der bezüglich ihres radialen Abstandes vermessenen Punkte aufgespannt wird. Es hat sich gezeigt, dass sich mit dieser Variante eine besonders hohe Genauigkeit bei der Berechnung des Umfangs erreichen lässt. Zum Ermitteln eines entsprechenden Kreisbogens können in allgemein bekannter Weise drei der vermessenen Punkte mit Geraden verbunden, in deren Mittelpunkt jeweils eine Orthogonale gebildet wird. Der Schnittpunkt der beiden Orthogonalen bildet einen Mittelpunkt eines durch diese drei Punkte definierten Kreises und somit auch die Rotationsmitte eines die drei Punkte verbindenden Kreisbogens. Zum Erzielen einer besonders hohen Genauigkeit kann dabei vorgesehen sein, dass die Länge dieses Kreisbogens lediglich zwischen den ersten beiden Punkten ermittelt wird. Anschließend werden der zweite und dritte Punkt, sowie ein in Umfangsrichtung dazu benachbarter vierter Punkt verwendet, um einen neuen Kreisbogen zwischen dem zweiten, dritten und vierten Punkt zu berechnen. Dabei wird entsprechend die Teillänge zwischen dem zweiten und dritten Punkt ermittelt. Dieses wird für sämtliche vermessene Punkte durchgeführt und die ermittelten Abstandssegmente werden abschließend zur Berechnung des Gesamtumfanges addiert.

Eine Weiterbildung der Erfindung sieht ferner vor, dass die Messanordnung und der Expansionskörper relativ zueinander um die zentrale Längsachse rotierbar sind. Dies ermöglicht, dass je nach verwendeter Kompressionsbandage die Messanordnung und der Expansionskörper zur Erfassung der veränderlichen Querschnittsabmessungen in einer bevorzugten relativen Ausrichtung zueinander angeordnet werden können. Ebenso erleichtert dies das vorstehend beschriebene Erfassen mehrerer radialer Abstände in Umfangsrichtung. Zum Einstellen bzw. Variieren der relativen Ausrichtung in Rotationsrichtung kann dabei beispielsweise ein Schrittmotor verwendet werden, der ein Drehmoment auf die Messanordnung oder den Expansionskörper überträgt.

Bei einer Weiterbildung der Erfindung ist vorgesehen, dass die Messanordnung und der Expansionskörper relativ zueinander entlang der zentralen Längsachse verlagerbar sind. Mit anderen Worten ist bei dieser Variante vorgesehen, dass die von der Messanordnung vermessene Querschnittsebene des Expansionskörpers und/oder daran angeordneter Kompressionsbandage durch eine entsprechende Verlagerung definiert einstellbar ist. Dies ermöglicht ebenfalls das Einstellen einer bevorzugten relativen Ausrichtung von Messanordnung und Expansionskörper.

Ferner kann erfindungsgemäß vorgesehen sein, dass die Messanordnungen mehrere Messeinheiten umfasst, die in definierten Positionen entlang der zentralen Längsachse angeordnet sind. Dies ermöglicht, dass das Erfassen der veränderlichen Querschnittsabmessungen in bevorzugten Querschnittsebenen gleichzeitig und ohne ein relatives Verlagern von Messanordnung und Expansionskörper entlang der Längsachse erfolgen kann. Dadurch werden die Schnelligkeit und die Genauigkeit der Messung erhöht. Dabei kann vorgesehen sein, dass die Messeinheiten in einem gleichen Abstand zueinander angeordnet sind oder aber verschiedenartig voneinander beabstandet sind. Die Abstände können insbesondere derart gewählt sein, dass die Messeinheiten in bevorzugt vermessenen oder normativ festgelegten Querschnittsebenen von an dem Expansionskörper positionierten Kompressionsbandagen liegen.

Bei einer Weiterbildung der Erfindung ist vorgesehen, dass die Vorrichtung dazu ausgebildet ist, die veränderlichen Querschnittsabmessungen in einer Mehrzahl von Querschnittsebenen zu ermitteln. Mit anderen Worten ist bei dieser Weiterbildung vorgesehen, dass die Kompressionsbandage hinsichtlich ihrer veränderlichen Querschnittsabmessungen entlang ihrer gesamten Länge vermessen wird. Dabei versteht es sich, dass zum Vermessen in mehreren Querschnittsebenen insbesondere derartige Vorrichtungen geeignet sind, bei denen die Messanordnung und der Expansionskörper wie vorstehend beschrieben relativ zueinander entlang der zentralen Längsachse verlagerbar sind oder bei denen mehrere Messeinheiten entlang der zentralen Längsachse angeordnet sind. Zwischen den Messwerten der einzelnen mittels der Messanordnung erfassten Querschnittsebenen kann dabei auch in allgemein bekannter Weise interpoliert werden, um den Verlauf der veränderlichen Querschnittsabmessungen entlang der zentralen Längsachse zu berechnen bzw. anzunähern.

Zum Verbessern der Messgenauigkeit ist bei einer Weiterbildung der Erfindung vorgesehen, dass die Messanordnung innerhalb des Expansionskörpers angeordnet ist. Dies ermöglicht, dass die Vorrichtung besonders kompakt aufgebaut und zum Positionieren einer Kompressionsbandage am Expansionskörper leicht zugänglich ist. Dies ist insbesondere dann vorteilhaft, wenn Kompressionsbandagen mit manuell einstellbaren Querschnittsabmessungen vermessen werden, wie sie beispielsweise über die Anmelderin verfügbar sind, und die zwischen einzelnen Messungen verstellt werden sollen. Weiterhin ist durch ein Messen innerhalb des Expansionskörpers eine höhere Genauigkeit bei dem Ermitteln der Querschnittsabmessungen der Kompressionsbandage gewährleistet. Anders als bei Messungen von außerhalb des Expansionskörpers und insbesondere Messungen eines Außenumfangs der Kompressionsbandage müssen Unregelmäßigkeiten in der Oberfläche oder variable Materialstärken, beispielsweise durch Silikoneinlagen innerhalb der Kompressionsbandagen, hierbei nicht aufwändig herausgerechnet werden, um die inneren Querschnittsabmessungen der Kompressionsbandage zu ermitteln. Diese inneren Querschnittsabmessungen sind insbesondere daher von Interesse, da sie direkt den Querschnittsabmessungen einer zu behandelnden Körperpartie eines Patienten zugeordnet werden können.

Bei einer Weiterbildung der Erfindung ist vorgesehen, dass der Expansionskörper als schlauchförmiger Ballon ausgebildet ist und die Expansionsanordnung ein Druckluftsystem umfasst. Ein derartiger schlauchförmiger Ballon kann beispielsweise aus einer Silikonfolie hergestellt sein, deren Materialstärke vorteilhafterweise unter den verwendeten Messbedingungen vernachlässigbar oder aber lediglich in bekannten und somit bei Berechnungen berücksichtigbaren Größenordnungen variiert. Durch Verwenden eines Druckluftsystems lässt sich ferner ein einfacher und kostengünstiger Betrieb der Vorrichtung gewährleisten.
Ferner kann erfindungsgemäß vorgesehen sein, dass die Messanordnung ein optisches Triangulationsmessprinzip verwendet. Dies gewährleistet, dass relativ klein bauende Sensoren verwendet werden können, die auch geringe Distanzen ausreichend genau erfassen können und die vergleichsweise kostengünstig sind. In allgemein bekannter Weise wird bei optischen Triangulationsmessverfahren ein Lichtstrahl in einem bekannten Winkel auf die Oberfläche eines Bauteils gerichtet, wobei der Reflexionswinkel des Lichtstrahls von einem Reflexionssensor erfasst wird. In Kenntnis des Abstandes zwischen Lichtquelle und Reflexionssensor sowie des Ausgangs- bzw. Aussendewinkels des Lichtstrahls kann demnach der Abstand zwischen Messanordnung bzw. Sensoreinheit und dem zu vermessenden Objekt ermittelt werden. Es hat sich dabei als besonders vorteilhaft erwiesen, für die Messanordnung bzw. deren Sensoreinheiten vorab den charakteristischen Zusammenhang zwischen erzeugtem elektrischem Signal und tatsächlich vorliegendem Abstand zu dem reflektierenden Objekt zu erfassen und als Kalibrationsdatensatz in einer Steuerung der Vorrichtung zu hinterlegen. Somit können für eine jede Sensoreinheit der tatsächlich vorliegende Abstandsmesswert besonders genau ermittelt werden und der Einfluss etwaiger Fertigungstoleranzen der Sensoren gemindert werden.
Die vorstehend genannte Aufgabe wird darüber hinaus mit einem Verfahren zum Vermessen des Kompressionsdruckes eines Kompressionsstrumpfes oder einer Kompressionsbandage nach Anspruch 14 gelöst. Wie vorstehend geschildert, kann zum Ermitteln des gesuchten Zusammenhangs zwischen Expansionskraft und Querschnittsabmessungen wahlweise eine dieser Größen vorgegeben und eingestellt werden und anschließend die dabei vorliegende, nicht vorgegebene Größe ermittelt und zugeordnet werden.
Bei einer Weiterbildung des Verfahrens ist vorgesehen, dass die Schritte b) bis d) wenigstens einmal zyklisch wiederholt werden, wobei der Betrag der vorgegebenen Größe in Schritt b) vor der wenigstens einen zyklischen Wiederholung variiert wird. Dies ermöglicht, dass bei Ausführen des erfindungsgemäßen Verfahrens mehrere Zusammenhänge zwischen Expansionskraft und veränderlichen Querschnittsabmessungen in einem Verfahrensdurchgang ermittelt werden können. Dabei kann beispielsweise vorgesehen sein, dass eine vorgegebene Expansionskraft, beispielsweise in Form eines vorherrschenden Druckniveaus innerhalb des Expansionskörpers, vor einer jeden zyklischen Wiederholung schrittweise erhöht oder verringert wird.
Bei einer Weiterbildung des erfindungsgemäßen Verfahrens ist vorgesehen, dass in Schritt d) eine mehrfache Messung der zu ermittelnden Größe ausgeführt wird und daraus ein Mittelwert gebildet wird. Dies ermöglicht, dass der Einfluss von Messfehlern minimiert wird. Dabei kann beispielsweise vorgesehen sein, dass aus der Gesamtzahl von ermittelten Messwerten ein Mittelwert gebildet wird oder aber aus lediglich einer Auswahl der ermittelten Messwerten, beispielsweise nach einem Löschen der betragsmäßig größten und/oder geringsten Messwerten zum Entfernen von Ausreißern.
Wenn die vorgegebene Größe die auf den Expansionskörper einwirkenden Expansionskraft und die zu ermittelnde Größe die veränderlichen Querschnittsabmessungen der Kompressionsbandage sind, kann bei dem erfindungsgemäßen Verfahren ferner vorgesehen sein, dass in Schritt d) wenigstens ein radialer Abstand zwischen einem Punkt auf der Umfangsfläche des Expansionskörpers und/oder der daran positionierten Kompressionsbandage und einer zentralen Längsachse des Expansionskörpers ermittelt wird.
In diesem Zusammenhang kann erfindungsgemäß ferner vorgesehen sein, dass in Schritt d) eine Mehrzahl von radialen Abständen ermittelt wird, wobei zum Ermitteln des radialen Abstandes eine Messanordnung verwendet wird, und wobei die Messanordnung und die Einheit von Expansionskörper und daran positionierter Kompressionsbandage um vorbestimmte Winkelbeträge relativ zueinander rotiert werden. Mit anderen Worten ist bei dieser Weiterbildung vorgesehen, dass der Umfang des Expansionskörpers und/oder daran angeordneter Kompressionsbandage durch Erfassen mehrerer Punkte auf den jeweiligen Umfangsflächen ermittelt wird. In diesem Zusammenhang kann analog zur vorstehend beschriebenen Weise ferner erfindungsgemäß vorgesehen sein, dass zum Ermitteln des Umfangs segmentweise zumindest eine Teillänge eines Kreisbogens berechnet wird, der von wenigstens drei der bezüglich ihres radialen Abstandes vermessenen Punkten aufgespannt wird.

Die Erfindung wird im Folgenden beispielhaft anhand der beiliegenden Figuren beschrieben. Es stellen dar:
- Fig. 1: eine räumliche Ansicht einer ersten Ausführungsform einer erfindungsgemäßen Vorrichtung, umfassend eine Prinzipskizze zur Erläuterung einer Druckluftsteuerung sowie einer Steuerung der Messanordnung;
- Fig. 2: eine Explosionsansicht einer oberen Dichtungsanordnung und einer oberen Lageranordnung gemäß der ersten Ausführungsform;
- Fig. 3: eine achsenthaltende Schnittansicht der zusammengesetzten Anordnungen aus Fig. 2;
- Fig. 4: eine achsenthaltende Schnittansicht einer unteren Dichtungsanordnung und einer unteren Lageranordnung gemäß der ersten Ausführungsform;
- Fig. 5: eine Ansicht des Antriebsmechanismus der Messanordnung gemäß der ersten Ausführungsform;
- Fig. 6 und 7: Ansichten der Messanordnung gemäß der ersten Ausführungsform im unmontierten sowie im montierten Zustand;
- Fig. 8: ein Flussdiagramm zum Erläutern eines Messverfahrens mit der in Fig. 1 gezeigten Vorrichtung;
- Fig. 9: eine Darstellung zum Erläutern einer Auswertungsmöglichkeit der gewonnen Messdaten mit der erfindungsgemäßen Vorrichtung; und
- Fig. 10: eine Darstellung zum Erläutern der Umfangsberechnung des in Fig. 8 gezeigten Verfahrens.

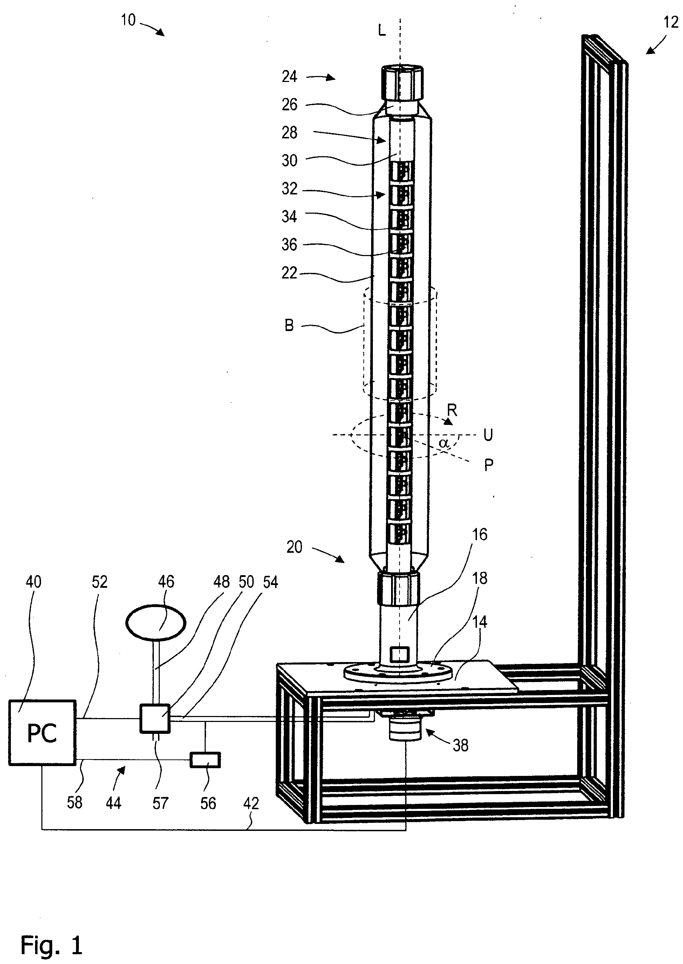

In Fig. 1 ist eine erfindungsgemäße Vorrichtung zum Messen des Kompressionsdruckes von Kompressionsbandagen gezeigt und allgemein mit 10 bezeichnet. Die Vorrichtung 10 umfasst einen Maschinenrahmen 12, der aus Metallprofilen zusammengesetzt ist und an dem eine Grundplatte 14 befestigt ist. An der Grundplatte 14 ist ein Fußbauteil 16 angeordnet, das mit einem hohlen Innenquerschnitt ausgebildet ist und einen an der Grundplatte fixierten sockelartigen Befestigungsabschnitt 18 aufweist. Wie nachfolgend noch ausführlicher erläutert, ist an dem Fußabschnitt 16 eine untere Dichtungsanordnung 20 angeordnet, die einen Expansionskörper 22 dichtend an dem Fußbauteil 16 befestigt.

Der Expansionskörper 22 ist als ein schlauchförmiger und aus einer elastisch deformierbaren Silikonfolie hergestellter Ballon mit geschlossenem Querschnittsprofil ausgebildet, der sich im Wesentlichen entlang einer zentralen Längsachse L erstreckt. Aus Darstellungsgründen ist der Expansionskörper 22 in dieser Figur dabei in Teilschnittansicht gezeigt, d.h. die vordere Hälfte ist weggeschnitten, um einen Einblick in das Innere des Expansionskörpers 22 zu ermöglichen. Die erfindungsgemäße Vorrichtung 10 umfasst weiterhin eine obere Dichtungsanordnung 24, mit welcher der Expansionskörper 22 an einer oberen Lagerbuchse 26 dichtend befestigt ist.

Im Inneren des Expansionskörpers 22 ist eine Messanordnung 28 angeordnet. Diese umfasst ein Sensorrohr 30, das mehrere Durchbrüche 32 aufweist. Innerhalb des Sensorrohrs 30 ist eine Sensorleiste 34 angeordnet, an der in jeweils zu den Durchbrüchen 32 korrespondierenden Positionen eine Mehrzahl von Sensoreinheiten 36 angeordnet ist, die als optische Abstandssensoren ausgebildet sind. Im gezeigten Ausführungsbespiel umfasst die Messanordnung 28 sechzehn Sensoreinheiten 36 auf der Sensorleiste 34 und korrespondierende Durchbrüche 32 im Sensorrohr 30, wobei in Fig. 1 aus Darstellungsgründen nur jeweils eines der entsprechenden Elemente mit einem Bezugszeichen versehen ist.

Das Sensorrohr 30 und die Sensorleiste 34 sind miteinander verdrehgesichert verbunden. Der Messanordnung 28 ist, wie nachfolgend noch ausführlicher beschrieben, in der oberen Lagerbuchse 26 und dem Fußbauteil 16 jeweils durch eine untere und obere Lageranordnung rotierbar gelagert. Ferner ragt es durch das rohrförmig ausgebildete Fußbauteil 16 hindurch, sodass es auf der in Fig. 1 nicht einsehbaren Seite der Grundplatte 14 mittels eines Antriebsmechanismus 38 rotatorisch bewegt werden kann (siehe auch nachfolgende Beschreibung).

Bei der gezeigten Ausführungsform sind der Maschinenrahmen 12, die Grundplatte 14, die oberen und unteren Dichtungsanordnungen 20, 24, die Lagerbuchse 26, das Fußbauteil 16 sowie der schlauchförmige Expansionskörper 22 im Betrieb der Vorrichtung 10 allgemein unbeweglich, während die Messanordnung 28 über den Antriebsmechanismus 38 um die zentrale Längsachse L innerhalb des Expansionskörpers 22 rotierbar ist.

In Fig. 1 sind ferner verschiedene Steuerschaltkreise der Vorrichtung 10 schematisch angedeutet. Diese sind jeweils an eine Steuereinheit 40 angeschlossen, die in der gezeigten Ausführungsform ein herkömmlicher PC ist. Die Steuereinheit 40 ist über eine erste Leitung 42 an den Antriebsmechanismus 38 und die Messanordnung 28 angeschlossen. Somit kann die Steuerung 40 Messbefehle an die einzelnen Abstandssensoren 36 übermitteln sowie Messsignale von diesen empfangen. Weiterhin kann die Steuerung 40 über die Leitung 42 Befehle bezüglich einer auszuführenden Rotationsbewegung an den Antriebsmechanismus 38 übermitteln und Signale bzgl. einer aktuell eingenommenen Rotationsposition P der Einheit aus Seonsorrohr 30 und Sensorleiste 34 von diesem empfangen. Zum Bestimmen der Rotationsposition P wird dabei ein virtueller Rotationsbereich der Messanordnung 28 um die zentrale Längsachse L definiert, der eine an sich beliebige Ausrichtung der Messanordnung 28 als Ursprungsposition U definiert (0°). Diese Position U dient als Referenzposition, von der aus an eine vollständige Umdrehung der Messanordnung 28 um 360° definiert ist. Von der Ursprungsposition U ausgehend ist die Rotationsposition P der Messanordnung 28 als ein in eine Rotationsrichtung R gemessener Winkelbetrag a definiert. Im gezeigten Fall ist die Rotationsrichtung im Uhrzeigersinn um die zentrale Längsachse L definiert und die Messanordnung 28 nimmt eine Rotationsposition P mit dem Betrag des Winkels a bezogen auf die Ursprungsposition U ein.

Ferner ist in Fig. 1 ein von der Steuerung 40 gesteuerter Druckregelkreislauf 44 gezeigt, der eine Expansionsanordnung der gezeigten Ausführungsform bildet. Dieser umfasst eine Druckluftquelle 46, die einem Druckregelventil 50 über eine Druckluftleitung 48 Druckluft zuführt. Das Druckregelventil 50 kann von der Steuerung 40 über eine zweite Leitung 52 angesteuert werden, so dass Druckluft in vorbestimmten Mengen über eine dem Druckluftventil 50 nachgeschaltete Druckluftleitung 54 in den Expansionskörper 22 geleitet werden kann. An die Druckluftleitung 54 ist ein Drucksensor 56 angeschlossen, der das in der Druckluftleitung 54 vorherrschende Druckniveau erfasst und über eine dritte Leitung 58 an die Steuerung 40 übermittelt. Dadurch wird der Druckregelkreislauf 44 geschlossen. Es gilt daraufhin hinzuweisen, dass das Druckniveau in der Druckluftleitung 54 im Wesentlichen demjenigen innerhalb des Expansionskörpers 22 entspricht.

Das Druckregelventil 50 ist ferner an eine nach außen geöffnete Auslassleitung 57 angeschlossen und dazu ausgebildet, bei entsprechender Ansteuerung durch die Steuerung 40 diese mit der Druckluftleitung 54 zu verbinden. Dies ermöglicht ein entweichen von Druckluft aus dem Expansionskörper 22 in die Umgebung, wodurch ein in dem Expansionskörper 22 vorherrschendes Druckniveau geregelt abgesenkt werden kann.

Es versteht sich, dass aufgrund der Ausbildung als allgemein elastisch deformierbarer Ballon der Expansionskörper 22 in Abhängigkeit eines eingestellten Druckniveaus jeweils veränderliche Querschnittsabmessungen einnimmt. Diese elastische Deformation kann entsprechend auf eine an dem Expansionskörper 22 positionierte zu vermessende Kompressionsbandage B (strichliniert angedeutet) übertragen werden.

Im Folgenden wird auf einzelne Baugruppen und Merkmale der in Fig.1 gezeigten Vorrichtung 10 unter Bezugnahmen auf die weiteren Zeichnungen gesondert eingegangen. Zur Erleichterung des Verständnisses werden mehrfach innerhalb der Vorrichtung 10 vorkommende, gleichartige oder gleichwirkende Merkmale mit gleichen Bezugszeichen versehen.

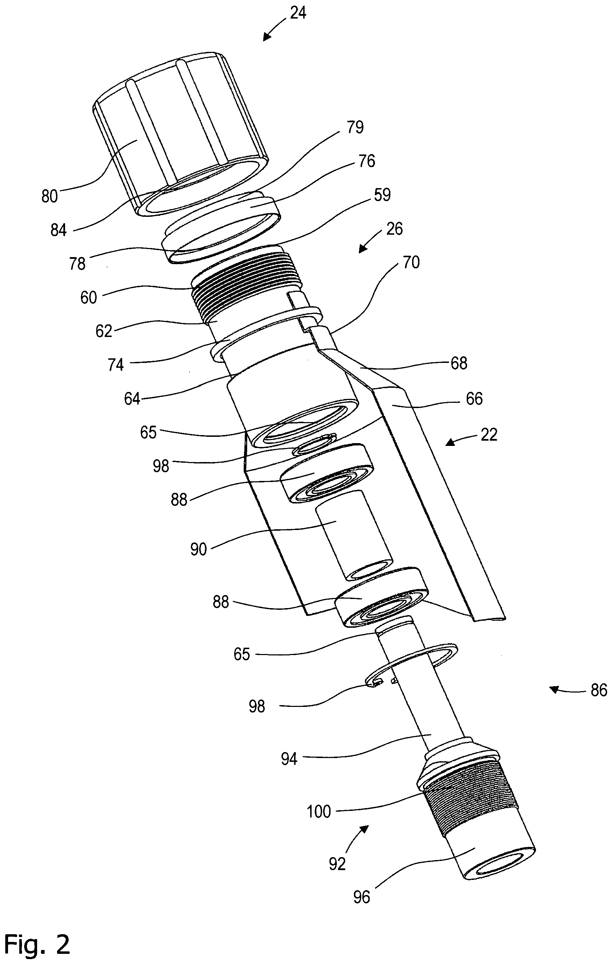

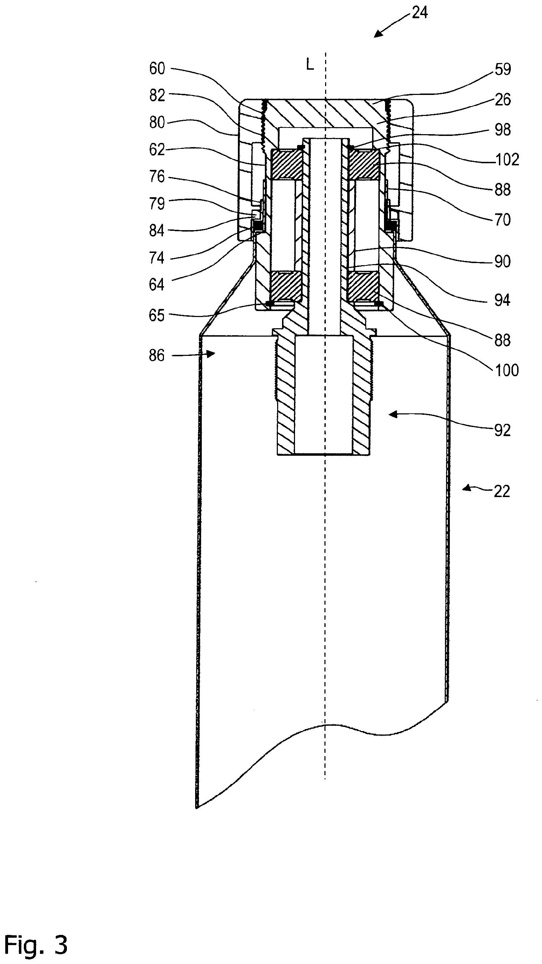

In Fig. 2 sind die obere Dichtungsanordnung 24 und die obere Lageranordnung 86 der in Fig. 1 gezeigten Vorrichtung als Explosionsdarstellung gezeigt. Man erkennt den bereits vorstehend beschriebenen Expansionskörper 22 (erneut in Teilschnittansicht gezeigt) sowie die Lagerbuchse 26. Die Lagerbuchse 26 ist als im Wesentlichen topfförmiges Bauteil ausgebildet, mit einer in Fig. 2 oberen geschlossenen Bodenfläche 59. An ihrer Außenumfangsfläche weist die Lagerbuchse 26 ein Außengewinde 60 auf, eine gegenüber dem Außengewinde zurückgesetzte Zwischenfläche 62 sowie eine sich daran anschließende Durchmesserstufe 64. In ihrem hohlförmigen Innenraum weist die Lagerbuchse 26 ebenfalls mehrere bezüglich ihres Durchmessers abgestufte Bereiche auf (s. nachfolgende Beschreibung Fig. 3) sowie die in Fig. 2 an ihrem unteren Ende erkennbare Aufnahmenut 65.

Der Expansionskörper 22 weist einen zylindrischen Hauptabschnitt 66 auf an den sich eine konischer, sich in Richtung der Lagerbuchse 26 verjüngender, im Wesentlichen formstabiler Endabschnitt 68 anschließt. Der Endabschnitt 68 geht in einen zylindrischen Klemmabschnitt 70 über, dessen Durchmesser demjenigen der Durchmesserstufe 64 der Lagerbuchse 26 entspricht.

Die obere Dichtungsanordnung 24 umfasst einen elastisch deformierbaren Dichtring 74, der derart bemessen ist, dass er mit der Durchmesserstufe 64 der Lagerbuchse 26 in eine dichtende Anlage bringbar ist. Ferner umfasst die obere Dichtungsanordnung 24 eine Dichtungsbuchse 76, die eine Innendurchmesserstufe 78 aufweist, welche den Dichtungsring 74 aufnimmt und gegen die Durchmesserstufe 64 der Lagerbuchse 26 vorspannt. An ihrem in Fig. 2 oberen Ende ist die Dichtungsbuchse 76 mit einer Außendurchmesserstufe 79 versehen. Weiterhin umfasst die obere Dichtungsanordnung 24 eine Dichtungsmuffe 80, die mit einem mit dem Außengewinde 60 der Lagerbuchse 26 in Eingriff bringbares Innengewinde 82 ausgebildet ist (siehe nachfolgende Beschreibung von Fig. 3). Ferner weist die Dichtungsmuffe 80 eine Innendurchmesserstufe 84 auf, die korrespondierend zu der Außendurchmesserstufe 79 der Dichtungsbuchse 76 ausgebildet ist und diese entsprechend aufnimmt.

In Fig. 2 ist zusätzlich eine obere Lageranordnung 86 gezeigt, mit der die in dieser Figur nicht dargestellte Messanordnung 28 rotatorisch in der Lagerbuchse 26 gelagert ist. Die obere Lageanordnung 86 umfasst zwei Lagerringe 88, zwischen denen eine Distanzhülse 90 angeordnet ist. Ein Lagerkopf 92 weist einen rohrförmig ausgebildeten Lagerabschnitt 94 auf, der durch die Öffnungen der Lagerringe 88 sowie der Distanzhülse 90 hindurchragt. Am oberen Ende des Lagerabschnitts 94 ist eine Aufnahmenut 65 ausgebildet, in die ein Sicherungsring 98 eingesetzt ist. Der Sicherungsring 98 liegt dabei an einer Stirnfläche des oberen Lagerrings 88 an, so dass der Lagerabschnitt 94 gegen ein Herausrutschen aus der Anordnung von Lagerringen 88 und Distanzhülse 90 gesichert ist. Der Lagerkopf 92 ist ferner mit einem Aufnahmeabschnitt 96 ausgebildet, der ein Außengewinde 100 zum Befestigen des Sensorrohres 30 aufweist (nicht dargestellt). Schließlich umfasst die Lageranordnung 86 einen weiteren Sicherungsring 98, der in die Aufnahmenut 65 der Lagerbuchse 26 eingesetzt ist und mit der in Fig. 2 nach unten weisenden Stirnfläche des unteren Lagerrings 88 in Anlage steht.

In Fig. 3 sind die in der Explosionsdarstellung aus Fig. 2 dargestellten Anordnungen im zusammengebauten Zustand gezeigt. Man erkennt wiederum die obere, geschlossen ausgebildete Bodenfläche 59 der Lagerbuchse 26 sowie deren Außengewinde 60, Zwischenfläche 62 und Durchmesserstufe 64. Weiterhin erkennt man den Expansionskörper 22 sowie dessen Klemmabschnitt 70.

Aus der Schnittansicht von Fig. 3 wird ersichtlich, dass der Klemmabschnitt 70 durch die Dichtungsanordnung 24 derart in Anlage zu der Außenumfangsfläche der Lagerbuchse 26 gebracht wird, dass eine dichtende Verbindung zwischen Expansionskörper 22 und Lagerbuchse 26 erreicht wird. Hierzu wird der Klemmabschnitt 70 mittels dem Dichtring 74 und der Lagerbuchse 76 unter elastischer Deformation gegen die Durchmesserstufe 64 der Lagerbuchse vorgespannt und ebenso in Anlage zu der Zwischenfläche 62 gezwungen. Die Vorspannungskraft wird dabei durch ein Andrücken der Dichtungsbuchse 76 über die Dichtungsmuffe 80 gegen die Durchmesserstufe 64 erzeugt. Dabei steht die Dichtungsmuffe 80 mit ihrem Innengewinde 82 im Eingriff mit dem Außengewinde 60 der Lagerbuchse 26. Durch Anpassen des Grades des Eingriffs dieser Gewinde 60, 82 bzw. durch Einstellen der Aufschraubtiefe der Dichtungsmuffe 80 auf die Lagerbuchse 26 kann somit eine Anpresskraft über die Innendurchmesserstufe 84 der Dichtungsmuffe 80 auf die Lagerbuchse 76 übertragen werden. Letztere spannt entsprechend den Dichtungsring 74 gegen die Durchmesserstufe 64 der Lagerbuchse 26 vor und klemmt dabei den Klemmabschnitt 70 dichtend zwischen der Außenumfangsfläche der Lagerbuchse 26 und dem Dichtungsring 74 ein.

Ferner erkennt man in Fig. 3 die obere Lageranordnung 86 im zusammengebauten Zustand, sowie deren Anordnung innerhalb der Lagerbuchse 26. Wie vorstehend beschrieben, ragt der Lagerkopf 92 mit seinem oberen Lagerabschnitt 94 durch die Anordnung der Lagerringe 88 sowie der Distanzhülse 90 hindurch und ist an seinem oberen Ende gegen ein Herausfallen bzw. Herausrutschen mittels des Sicherungsrings 98 gesichert. Der obere Lagerring 88 stützt sich dabei an einer Innendurchmesserstufe 102 der Lagerbuchse 26 ab, während die Position des unteren Lagerrings 88 durch den unteren Sicherungsring 98 festgelegt ist, der in die Aufnahmenut 65 der Lagerbuchse 26 eingesetzt ist. Somit ist es ersichtlich, dass der Lagerkopf 92 in der feststehenden Anordnung aus Lagerringen 88 und Distanzhülse 90 um die zentrale Längsachse L innerhalb der ebenfalls feststehenden Lagerbuchse 26 rotieren kann.

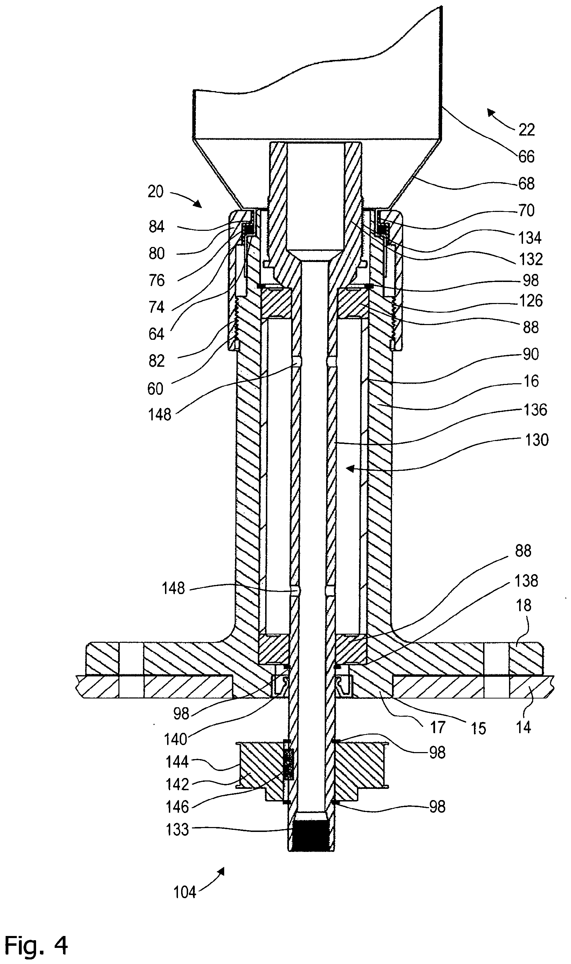

In Fig. 4 sind die untere Dichtungsanordnung 20 und die untere Lageranordnung 104 der Ausführungsform aus Fig. 1 in einer achsenthaltenden Schnittansicht gezeigt. Dabei ist die untere Dichtungsanordnung 22 prinzipiell analog zu der vorstehend beschriebenen oberen Dichtungsanordnung 24 ausgebildet. Man erkennt wiederum, dass der Expansionskörper 22 an seinem unteren Ende ausgehend von seinem zylindrischen Hauptabschnitt 66 in einen sich konisch verjüngenden unteren Endabschnitt 68 übergeht, der wiederum in einen Klemmabschnitt 70 übergeht. Der Klemmabschnitt 70 wird dabei analog wie zuvor beschrieben gegen die Außenumfangsfläche des Fußbauteils 16 vorgespannt bzw. verklemmt.

Das Fußbauteil 16 ist als im Wesentlichen zylindrisch geformtes hohles Bauteil ausgebildet und über seinen Befestigungsabschnitt 18 mit der Grundplatte 14 verschraubt (Schrauben nicht dargestellt). Dabei weist das Fußbauteil 16 zusätzlich einen Zentrierungsstutzen 17 auf, mit dem es in eine korrespondierende Zentrierungsbohrung 15 der Grundplatte 14 eingesetzt ist. An seinem in Fig. 4 oberen Ende ist das Fußbauteil 16 an seiner Außenumfangsfläche ferner mit einer Durchmesserstufe 64 ausgebildet.

Analog zur oberen Dichtungsanordnung 24, umfasst die untere Dichtungsanordnung 20 eine Anordnung aus einer Dichtungsmuffe 80, einer Lagerbuchse 76 sowie einem unteren Dichtungsring 74, mit der der Expansionskörper 22 dichtend gegen die Außenumfangsfläche des Fußbauteils 16 verklemmt bzw. daran angepresst wird. Hierzu steht die Dichtungsmuffe 80 wiederum über ein Innengewinde 82 im Eingriff mit einem Außengewinde 60 des Fußbauteils 16. Ferner weist die Dichtungsmuffe 80 eine Innendurchmesserstufe 84 auf, über die die Lagerbuchse 76 und der darin aufgenommene Dichtungsring 74 sowie der Klemmabschnitt 70 des Expansionskörpers 22 gegen die Durchmesserstufe 64 des Fußbauteils 16 vorgespannt bzw. verklemmt werden.

In Fig. 4 erkennt man weiterhin die untere Lageranordnung 104, mit der die Messanordnung 28 (nicht dargestellt) rotatorisch im Fußbauteil 16 gelagert ist. Analog zur vorstehend beschriebenen oberen Lageanordnung 86 umfasst die untere Lageranordnung 104 einen Lagerkopf 130, der an seinem in Fig. 4 oberen Ende einen Aufnahmeabschnitt 132 mit einem Außengewinde 134 aufweist, auf das das in dieser Figur nicht dargestellte Sensorrohr 30 aufgeschraubt werden kann. Ferner umfasst der Lagerkopf 130 einen länglichen Lagerabschnitt 136, der durch das Fußbauteil 16 hindurch ragt. Der Lagerabschnitt 132 ist in zwei Lagerringen 88 aufgenommen, die innerhalb des Fußbauteils 16 mittels einer Distanzhülse 90 beabstandet voneinander angeordnet sind. Dabei liegt der untere Lagerring 88 an einer unteren Innendurchmesserstufe 138 des Fußbauteils 16 an, sowie an einem an der Außenumfangsfläche des Lagerabschnitts 132 angeordneten Sicherungsring 98. Die Position des oberen Lagerrings 88 ist über die Distanzhülse 90 sowie einen in der Innenumfangsfläche des Fußbauteils 16 aufgenommenen weiteren Sicherungsring 98 festgelegt.

Der Lagerabschnitt 136 ragt sowohl durch die Anordnung der Lagerringe 88 und Distanzhülse 90 sowie durch das Fußbauteil 16 hindurch und erstreckt sich bis auf die von dem Expansionskörper 22 abgewandte Seite der Grundplatte 14. Mit anderen Worten tritt der Lagerabschnitt 136 an der Unterseite der Grundplatte 14 ins Freie und ist dort frei zugänglich. Um hierbei für eine zusätzliche Abdichtung zu sorgen, ist im in Fig. 4 unteren Endabschnitt des Fußbauteils 16 ein Wellendichtring 140 angeordnet, der an der Außenumfangsfläche des Lagerabschnitts 136 anliegt. Analog zur oberen Lageranordnung 86 ist der untere Lagerkopf 130 somit rotatorisch in der feststehenden Anordnung aus Lagerringen 88 innerhalb des Fußbauteils 16 gelagert.

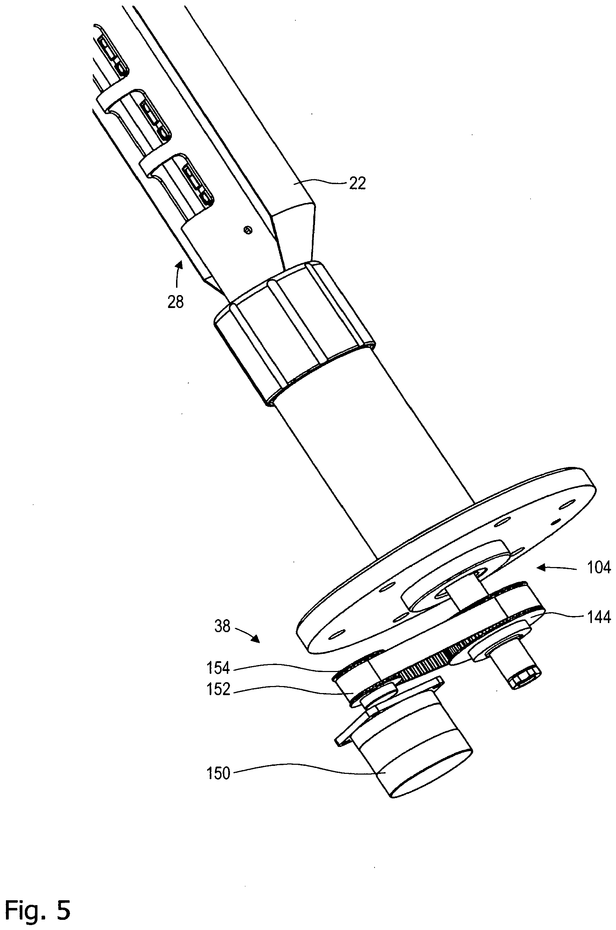

Aus Fig. 4 wird ferner ersichtlich, dass an dem Lagerabschnitt 136 an seinem in dieser Figur unteren, über die Grundplatte 14 hervorstehenden Ende ein Antriebsrad 142 angeordnet ist. Dieses ist mittels zweier Sicherungsringe 98 sowie einer Passfeder 146 an dem Lagerabschnitt 136 in verdrehgesicherter Weise festgelegt. Das Antriebsrad 142 weist eine umlaufende Außenverzahnung 144 auf, die mit einem in Fig. 4 nicht gezeigten Zahnriemen des Antriebsmechanismus 38 in Eingriff steht (s. nachfolgende Beschreibung von Fig. 5). Somit kann die Messanordnung 28 durch rotatorisches Antreiben des Antriebsrades 144 innerhalb der Vorrichtung 10 um die zentrale Längsachse L verdreht werden.

Aus Fig. 4 geht ferner hervor, dass der Lagerkopf 130 hohl ausgebildet ist und an seinem in Fig. 4 unteren Ende des Lagerabschnitts 136 ein Innengewinde 133 aufweist. Das Innengewinde 133 dient dem Anschließen der in Fig. 4 nicht dargestellten, in Zusammenhang mit Fig. 1 beschriebene Druckluftleitung 54. Somit kann über die Druckluftleitung 54 Druckluft durch den Innenhohlraum des unteren Lagerkopfs 130 in den Expansionskörper 22 strömen. Dabei ist weiterhin anzumerken, dass der Lagerkopf 130 in seinem Lagerabschnitt 136 zwei Ausgleichsbohrungen 148 aufweist, die einen Druckausgleich innerhalb der Vorrichtung und insbesondere zwischen Expansionskörper 22 und dem Zwischenraum zwischen den Lagerringen 88 der untere Lageranordnung 104 ermöglichen. Ferner gilt anzumerken, dass der Innenhohlraum des unteren Lagerkopfs 130 auch als Durchführschacht für die erste Leitung 42 zum Herstellen einer Verbindung zwischen den einzelnen Sensoreinheiten 36 und der Steuerung 40 dient (s. Fig. 1).

In Fig. 5 ist der Antriebsmechanismus 38 zum Rotieren der Messanordnung 28 gezeigt. Aus Darstellungsgründen sind hierbei einzelne Teile der Vorrichtung 10, insbesondere die Grundplatte 14, weggelassen und der Expansionskörper 22 ist wiederum in Teilschnittansicht gezeigt. Der Antriebsmechanismus 38 umfasst einen an die Leitung 42 (nicht dargestellt) angeschlossenen Schrittmotor 150, der einen Zahnriemen 152 über ein Motorantriebsrad 154 bewegt. Der Zahnriemen 152 ist mit dem Antriebsrad 144 der unteren Lageranordnung 104 verbunden und überträgt somit ein von dem Schrittmotor 150 erzeugtes Drehmoment auf die Messanordnung 28.

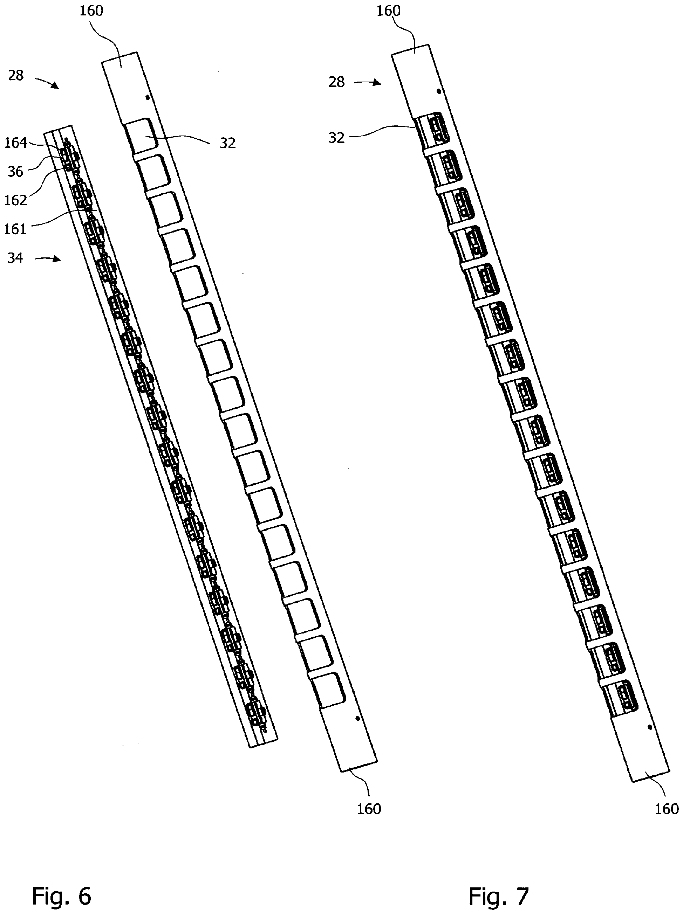

In den Fig. 6 und 7 ist die Messanordnung 28 des Ausführungsbeispiels aus Fig. 1 in Form des Sensorrohres 30 und der Sensorleiste 34 im unmontierten (Fig. 6) sowie im zusammengesetzten (Fig. 7) Zustand gezeigt. Das Sensorrohr 30 weist an seinem oberen und unteren Ende nicht dargestellte Innengewinde 160 auf, die mit den vorstehend beschriebenen Außengewinden 100, 134 der oberen und unteren Lagerköpfe 92, 130 (nicht dargestellt) in Eingriff gebracht werden können. Das Sensorrohr 30 weist ferner die bereits im Zusammenhang mit Fig. 1 beschriebenen Durchbrüche 32 auf. Die über die Zuführleitung 54 zugeführte Druckluft kann somit, wie vorstehend beschrieben, zunächst durch den unteren Lagerkopf 130 und von dort aus in das Sensorrohr 30 strömen, wobei sie durch die Durchbrüche 32 in den Innenraum des Expansionskörpers 22 gelangt.

Die Sensorleiste 34 ist als sich länglich erstreckendes Bauteil ausgebildet und innerhalb des Sensorrohres über eine nicht dargestellte Schraubverbindung befestigt. Die Sensorleiste 34 weist einen Befestigungsabschnitt 161 auf, an der sechzehn Sensoreinheiten 36 in gleichen Abständen von beispielsweise 5 cm zueinander angeordnet sind. Die Sensoreinheiten 36 sind dabei jeweils, wie in Fig. 7 gezeigt, in einer zu einem Durchbruch 32 des Sensorrohres 30 korrespondierenden Position angeordnet. Aus Darstellungsgründen ist in diesen Figuren jeweils nur eine entsprechende Sensoreinheit 36 bzw. ein Durchbruch 32 mit einem entsprechenden Bezugszeichen versehen.

Die Sensoreinheiten 36 sind im gezeigten Fall optische Triangulationssensoren, die jeweils eine Infrarotlichtquelle 162 sowie einen Reflexionssensor 164 umfassen. In an sich bekannter Weise sendet die Infrarotlichtquelle 162 einen Infrarotlichtstrahl in einem bekannten Winkel aus, der von einem gegenüberliegenden Punkt auf der Innenumfangsfläche des Expansionskörpers 22 reflektiert wird. Der reflektierte Lichtstrahl wird anschließend von dem Reflexionssensor 164 erfasst. Der Reflexionssensor 164 ist dazu ausgebildet, die Eintreffstelle und damit den Einfallwinkel des reflektierten Lichtstrahls zu ermitteln und ein dazu korrespondierendes elektrisches Signal zu generieren, welches an die Steuerung 40 übermittelt wird. Aus diesen Messdaten kann über herkömmliche Dreiecksberechnungen der Abstand zwischen der entsprechenden Sensoreinheit 36 und dem gegenüberliegenden Punkt auf der Innenumfangsfläche des Expansionskörpers 22 bestimmt werden.

Es gilt darauf hinzuweisen, dass die Sensoreinheiten 36 jeweils vorab kalibriert werden und ein entsprechender Kalibrationsdatensatz je Sensoreinheit 36 in der Steuerung 40 hinterlegt ist. Unter Kalibration ist dabei das Ermitteln des Zusammenhangs zwischen erzeugtem elektrischem Signal einer Sensoreinheit 36 und tatsächlich vorliegendem Abstand zu dem reflektierenden Objekt zu verstehen. In einem separaten Kalibrationsaufbau (nicht dargestellt) wird hierzu vorab eine jede Sensoreinheit 36 in variablen Abständen zu einer Reflexionsfläche angeordnet, die mit demselben Material bespannt ist, aus dem auch der Expansionskörper 22 hergestellt ist. Der Abstand zwischen Sensoreinheit 36 und Reflexionsfläche wird anschließend sukzessive und in bekannter Weise variiert und das bei einer entsprechenden Abstandsmessung durch die Sensoreinheit 36 erzeugte elektrische Signal wird nach einer jeden Variation des Abstandes erfasst. Daraus wird ein Zusammenhang zwischen erzeugtem elektrischem Signal einer jeden Sensoreinheit 36 und tatsächlich vorliegendem Abstand als ein Kalibrationsdatensatz in der Steuerung hinterlegt. Entsprechend kann die Steuerung 40 einem jeden der von den einzelnen Sensoreinheiten 36 erzeugten elektrischen Signale über deren individuelle, hinterlegte Kalibrationsdatensätzen einen tatsächlich vorliegenden Abstandsmesswert zuordnen. Diese Zuordnung erfolgt in an sich bekannter Weise unter Anwenden üblicher Interpolationsverfahren zwischen den einzelnen in den Kalibrationsdatensätzen hinterlegten Messwerten.

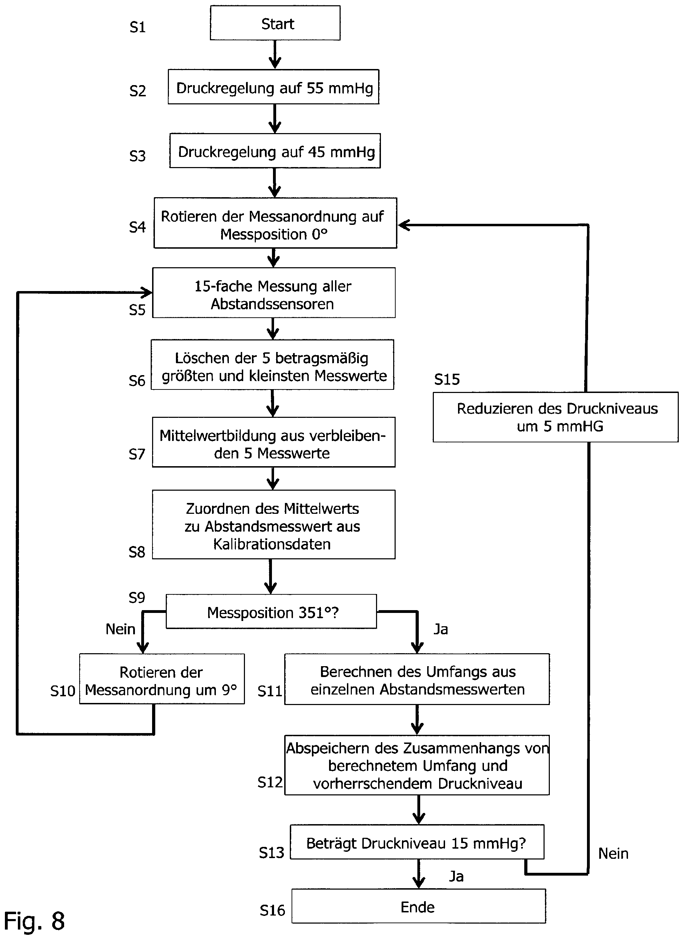

In Fig. 8 ist ein Ablaufdiagramm gezeigt, dass ein mit der beschriebenen Vorrichtung ausgeführtes Messverfahren erläutert. Nach Positionieren einer Kompressionsbandage an dem Expansionskörper 22 und Start des Messverfahrens, wird in Schritt S2 zunächst der Druck innerhalb des Expansionskörpers 22 auf einen Maximalwert von 55 mmHg mittels des Druckregelkreislaufs 44 eingestellt. Anschließend wird in Schritt S3 der im Expansionskörper 22 vorherrschende Druck auf 45 mmHg stabilisiert. Dabei versteht es sich, dass je nach Art der vermessenen Kompressionsbandage die Querschnittsabmessungen von Expansionskörper 22 und Kompressionsbandage, und insbesondere deren Umfänge, spezifische Werte für ein jedes der eingestellten Druckniveaus annehmen.

In Schritt S4 wird die Messanordnung 28 mittels des Antriebsmechanismus 38 auf die vorher festgelegte Ursprungsposition U von 0° rotiert. Nach Einnahme dieser Position wird in Schritt S5 mit jeder der Sensoreinheiten 36 eine fünfzehnfache Abstandsmessung zu einem gegenüberliegenden Punkt auf der Innenumfangsfläche des Expansionskörpers 22 durchgeführt. Für einen jeden Sensor werden die erzeugten elektrischen Messwerte in der Steuerung 40 gespeichert. Anschließend werden in Schritt S6 die fünf betragsmäßig größten und kleinsten Messwerte zwecks Minderung des Einflusses von Messausreißern gelöscht. Aus den verbleibenden fünf Messwerten berechnet die Steuerung 40 einen Mittelwert für jede der Sensoreinheiten 36. Für jeden dieser Mittelwerte findet ein Abgleich zu den in der Steuerung 40 hinterlegten Kalibrationsdatensätzen der jeweiligen Sensoreinheit 36 statt. Dementsprechend wird jedem Mittelwert ein Abstandsmesswert aus den individuellen Kalibrationsdaten der einzelnen Sensoreinheiten 36 zugeordnet. Dieser Abstandswert stellt das abschließende "Messergebnis" jeder Sensoreinheit 36 in der ersten Messposition von 0° dar und wird für jede der einzelnen Sensoreinheiten 36 in der Steuerung 40 gespeichert. Es gilt also zu betonen, dass die Schritte S5 bis S8 je einzelner Sensoreinheit 36 entlang der Sensorleiste 34 ausgeführt werden können. Es versteht sich, dass aber auch nur ein Teil der Sensorleiste 34 messtechnisch aktiviert werden kann, beispielsweise beim Vermessen einer kurzen Bandage nur der Teil der Sensorleiste 34 mit Sensoreinheiten 36, die innerhalb der zu vermessenden Bandage liegen.

In Schritt S9 wird überprüft, ob die aktuelle Messposition P einem Winkel von 351° entspricht. Dies erfolgt wiederum durch eine Abfrage der Schrittmotorposition durch die Steuerung 40. Ist dies nicht der Fall, so wird in Schritt S10 die Messanordnung um 9° in die vorbestimmte Rotationsrichtung R weiter rotiert. In dieser neuen Messposition werden anschließend die Schritte S5 bis S8 für eine jede der Sensoreinheiten 36 wiederholt und ein entsprechender zweiter Abstandsmesswert für diese Messposition in der Steuerung 40 hinterlegt. Dies wird so lange wiederholt, bis bei der Überprüfung in Schritt S9 ermittelt wird, dass die Messposition 351° beträgt. Ist dies der Fall, so würde die Messanordnung 28 bei einer weiteren Rotation um 9° ihre anfängliche Messposition P von 0° einnehmen. Mit anderen Worten, wurden bei Erfüllen der Bedingung aus Schritt S9 je Sensoreinheit 36 bereits vierzig, jeweils um 9° voneinander beabstandete radiale Abstandswerte zu der Innenumfangsfläche des Expansionskörpers 22 erfasst, bzw. die Positionen von vierzig auf der Innenumfangsfläche liegenden Punkten ermittelt.

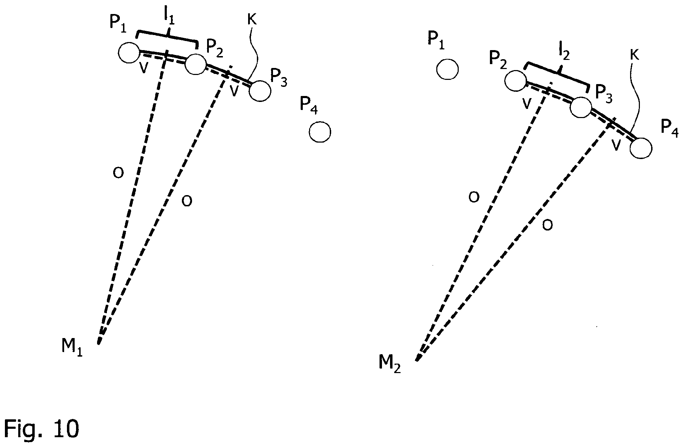

Aus diesen einzelnen ermittelten Punkten wird in Schritt S11 anschließend der Umfang der zu vermessenden Kompressionsbandage berechnet, was im Zusammenhang mit Fig. 10 nachfolgenden gesondert beschrieben wird. Der berechnete Umfang wird gemeinsam mit dem aktuell vorherrschenden Druckniveau in der Steuerung 40 hinterlegt. Im Schritt S13 wird geprüft, ob das Druckniveau die untere Messgrenze von 15 mmHG erreicht hat. Ist dies der Fall, so ist das Messverfahren beendet. Anderenfalls wird das Druckniveau in Schritt S15 um weitere 5 mmHG reduziert und die Messanordnung gemäß Schritt S4 erneut auf ihre Ausgangsmessposition von 0° rotiert. Anschließend findet erneut eine vollständige Messung in Umfangsrichtung statt, also eine umlaufende Messung des Abstandes zwischen einer jeden (aktiven) Sensoreinheit 36 und dem Expansionskörper 22 in Intervallen von 9°, wobei je Sensoreinheit 36 und in jeder Messposition wiederum die Schritte S5 bis S8 ausgeführt werden.

Zusammengefasst sieht das Verfahren im gezeigten Fall also erfindungsgemäß vor, dass in einer jeden einer Sensoreinheit 36 zugeordneten Querschnittsebene des Expansionskörpers 22 und für ein jedes Druckniveau zwischen 45 mmHG und 15 mmHG in Schritten von 5 mmHG ein Ermitteln des sich einstellenden Umfangs des Expansionskörpers 22 ausgeführt wird. Demnach liegt in der Steuerung für ein jedes der vermessenen Druckniveaus und eine jede der (aktiven) Sensoreinheiten 36 nach Ausführen des Verfahrens ein Zusammenhang zwischen den einzelnen Druckniveaus und dem Umfang des Expansionskörpers 22 vor. Dieser Umfang wird in Kenntnis der Materialstärke des Expansionskörpers 22 in jeweilige Innenumfangswerte der vermessenen Kompressionsbandage umgerechnet. Diese Daten können anschließend über an sich bekannte verschiedene graphische Darstellungen veranschaulicht werden. Insbesondere ist vorgesehen, dass für ein jedes der Druckniveaus ein Verlauf des Umfanges der Kompressionsbandage entlang der zentralen Längsachse L dargestellt wird, wobei zwischen den Position der einzelnen Sensoreinheiten 36 bzw. deren erfassten Werten in allgemein bekannter Weise interpoliert wird.

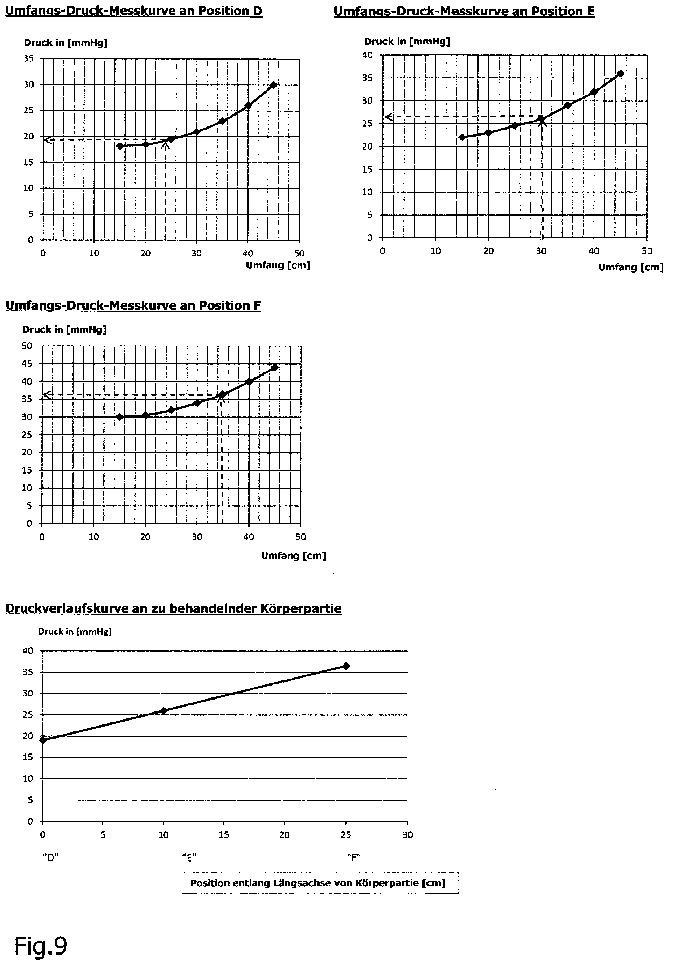

Eine besonders vorteilhafte Auswertungsmöglichkeit der gewonnen Messdaten mit der geschilderten Vorrichtung 10 wird bezugnehmend auf Figur 9 beschrieben. Hierbei wird die Kompressionsbandage zunächst in einer definierten Position entlang der der Längsachse L an dem Expansionskörper 22 angeordnet, so dass die einzelnen Sensoreinheiten 36 definierte Querschnittsebenen der Kompressionsbandage vermessen. Anschließend wird das vorstehend geschilderte Messverfahren ausgeführt und die gewonnen Messdaten werden gespeichert. An der zu behandelnden Körperpartie eines Patienten, bspw. an einem Knie, werden die Umfänge in denjenigen Positionen vermessen, die bei angelegter Kompressionsbandage in einer der vorab vermessenen Querschnittsebenen dieser Kompressionsbandage liegen. Beispielhaft sei von drei derartigen Positionen "D", "E" und "F" entlang der Längsachse der Kompressionsbandage bzw. der zu der behandelnden Körperpartie ausgegangen.

Wie in Fig. 9 gezeigt, liegt für jede dieser Positionen eine als durchgezogene Linie dargestellte Umfangs-Druck-Messkurve einer entsprechenden Sensoreinheit 36 vor. Somit kann aus den vorliegenden Patientendaten, also dem gemessenen Umfang der Körperpartie an der entsprechenden Position, der von der Kompressionsbandage an dieser Position ausgeübte Druck aus der Umfangs-Druck-Messkurve bestimmt werden (siehe strichlinierte Pfeile). Für jede Position "D", "E" und "F" kann auf diese Weise der an einem individuellen Patienten erwartungsgemäß ausgeübte Kompressionsdruck der Kompressionsbandage ermittelt werden.

Wie im untersten Graphen in Fig. 9 dargestellt, kann dies weiterführend dazu verwendet werden, dass eine patientenindividuelle Druckverlaufskurve entlang der Längsachse der Kompressionsbandage bzw. der zu der behandelnden Körperpartie aus den einzelnen ermittelten Kompressionsdrücken in den Positionen "D", "E" und "F" interpoliert wird.

Es versteht sich, dass auch Positionen am Patienten vermessen werden können, die nicht in mit den Sensoreinheiten 36 direkt vermessenen Querschnittsebenen der Kompressionsbandage liegen. Beispielsweise kann für eine Position, die entlang der Längsachse der Kompressionsbandage bzw. der zu der behandelnden Körperpartie betrachtet zwischen den Positionen "D" und "E" liegt, eine entsprechende Umfangs-Druck-Messkurve aus den jeweiligen Messkurven der Positionen "D" und "E" interpoliert werden.

In Fig. 10 ist das bei dem vorliegenden Ausführungsbeispiel verwendete Berechnungsverfahren zum Ermitteln des Umfanges in Schritt S11 des Verfahrens aus Fig. 8 gesondert dargestellt. Hierbei sind beispielhaft lediglich vier der vierzig vermessenen bzw. ermittelten Punkte Pᵢ auf der Innenumfangsfläche des Expansionskörpers 22 (nicht dargestellt) gezeigt. Für die ersten drei Punkte P₁ bis P₃ werden zwei lineare Verbindungslinien V berechnet, welche die Punkte P₁ und P₂ sowie P₂ und P₃ miteinander verbinden. Für eine jede dieser linearen Verbindungslinien V wird eine durch deren Mitte verlaufende Orthogonale O berechnet. Der Schnittpunkt dieser Orthogonalen O definiert den Mittelpunkt M₁ eines Kreises, der durch die drei Punkte P₁ bis P₃ definiert wird. Entsprechend können die Punkte P₁ bis P₃ mittels eines Kreisbogens K verbunden werden. Anschließend wird zwischen den ersten beiden Punkten P₁ und P₂ in an sich bekannter Weise die Länge des Kreisbogens I₁ berechnet. Diese Länge I₁ definiert ein erstes berechnetes Umfangssegment.

Wie in Fig. 10 auf der rechten Seite gezeigt, wird ein gleichartiges Vorgehen bezüglich der Punkte P₂, P₃ und P₄ gewählt. Mit anderen Worten schreitet die Berechnung also um einen Punkt in Umfangsrichtung fort. Entsprechend werden wiederum lineare Verbindungen V zwischen den Punkten und dazu mittige Orthogonalen O berechnet, die eine Rotationsmitte M₂ für einen von den Punkten P₂, P₃ und P₄ aufgespannten Kreis definieren. Die Mittelpunkte M₁ und M₂ müssen dabei nicht zwingenderweise zusammenfallen. Anschließend wird erneut ein die drei Punkte verbindender Kreisbogen K ermittelt und die Länge I₂ zwischen den ersten beiden Punkten P₂ und P₃ berechnet. Diese Länge I₂ stellt ein weiteres berechnetes Umfangssegment dar.

Das vorstehend geschilderte Berechnungsverfahren wird für eine jede Abstandsberechnung zwischen den vierzig ermittelten Punkten auf der Innenumfangsfläche des Expansionskörpers 22 ausgeführt. Anschließend werden die einzelnen berechneten Umfangssegmente I₁, I₂, bis Iᵢ addiert, um den Gesamtumfang zu ermitteln.

## Patentansprüche

1. Vorrichtung (10) zum Messen des Kompressionsdruckes von Kompressionsstrümpfen oder Kompressionsbandagen
umfassend
- einen sich im Wesentlichen entlang einer zentralen Längsachse (L) erstreckenden Expansionskörper (22), an dem zumindest abschnittsweise eine Kompressionsbandage (B) positionierbar und der dazu ausgebildet ist, gemeinsam mit der Kompressionsbandage (B) unter veränderlichen Querschnittsabmessungen zu expandieren und zu kontrahieren;
- eine Expansionsanordnung (44), die dazu ausgebildet ist, eine Expansionskraft zum Verändern der Querschnittsabmessungen des Expansionskörpers (22) zu erzeugen, und
- wenigstens eine Messanordnung (28), die dazu ausgebildet ist, die veränderlichen Querschnittsabmessungen von Expansionskörper (22) und/oder einer daran positionierten Kompressionsbandage (B) zu ermitteln,
wobei die Vorrichtung (10) dazu ausgebildet ist, anhand der ermittelten Querschnittsabmessungen einen Zusammenhang zwischen einer vorherrschenden Expansionskraft und den zugeordneten ermittelten Querschnittsabmessungen zu bestimmen, **dadurch gekennzeichnet, dass** die Expansionsanordnung (44) dazu ausgebildet ist, zum Erzeugen von Expansionskräften ein innerhalb des Expansionskörpers (22) vorherrschendes Druckniveau einzustellen.

2. Vorrichtung (10) nach Anspruch 1,
**dadurch gekennzeichnet, dass** die Vorrichtung (10) die Expansionskraft als Steuergröße verwendet und mittels der Messanordnung (28) die bei einer bestimmten Expansionskraft vorliegenden Querschnittsabmessungen ermittelt.

3. Vorrichtung (10) nach Anspruch 1,
**dadurch gekennzeichnet, dass** der Expansionskörper (22) mit einem gasförmigen Medium befüllbar ist und die Expansionsanordnung (44) dazu ausgebildet ist, den Druck dieses Mediums einzustellen.

4. Vorrichtung (10) nach einem der vorangehenden Ansprüche,
**dadurch gekennzeichnet, dass** die Messanordnung (28) dazu ausgebildet ist, zumindest einen radialen Abstand zwischen der zentralen Längsachse (L) und einem Punkt (Pᵢ) auf einer Umfangsfläche des Expansionskörpers (22) und/oder einer daran angeordneten Kompressionsbandage (B) zu ermitteln.

5. Vorrichtung (10) nach Anspruch 4,
**dadurch gekennzeichnet, dass** die Messanordnung (28) dazu ausgebildet ist, innerhalb wenigstens einer Querschnittsebene eine Mehrzahl von radialen Abständen entlang des Umfangs des Expansionskörpers (22) zu ermitteln, wobei die Vorrichtung dazu ausgebildet ist, aus dieser Mehrzahl den Umfang des Expansionskörpers (22) und/oder einer daran angeordneten Kompressionsbandage (B) zu berechnen.

6. Vorrichtung (10) nach Anspruch 5,
**dadurch gekennzeichnet, dass** zum Berechnen des Umfangs segmentweise zumindest eine Teillänge (I₁) eines Kreisbogens (K) berechnet wird, der von wenigstens drei der bezüglich ihres radialen Abstandes vermessenen Punkte (Pᵢ) aufgespannt wird.

7. Vorrichtung (10) nach einem der vorangehenden Ansprüche,
**dadurch gekennzeichnet, dass** die Messanordnung (28) und der Expansionskörper (22) relativ zueinander um die zentrale Längsachse (L) rotierbar sind.

8. Vorrichtung (10) nach einem der vorangehenden Ansprüche,
**dadurch gekennzeichnet, dass** die Messanordnung (28) und der Expansionskörper (22) relativ zueinander entlang der zentralen Längsachse (L) verlagerbar sind.

9. Vorrichtung (10) nach einem der vorangehenden Ansprüche,
**dadurch gekennzeichnet, dass** die Vorrichtung (10) mehrere Messeinheiten (36) umfasst, die in definierten Positionen entlang der zentralen Längsachse (L) angeordnet sind.

10. Vorrichtung (10) nach einem der vorangehenden Ansprüche,
**dadurch gekennzeichnet, dass** die Vorrichtung (10) dazu ausgebildet ist, die veränderlichen Querschnittsabmessungen in einer Mehrzahl von Querschnittsebenen zu ermitteln.

11. Vorrichtung (10) nach einem der vorangehenden Ansprüche,
**dadurch gekennzeichnet, dass** die Messanordnung (28) innerhalb des Expansionskörpers angeordnet ist.

12. Vorrichtung (10) nach einem der vorangehenden Ansprüche,
**dadurch gekennzeichnet, dass** der Expansionskörper (22) als schlauchförmiger Ballon ausgebildet ist und die Expansionsanordnung (44) ein Druckluftsystem umfasst.

13. Vorrichtung (10) nach einem der vorangehenden Ansprüche,
**dadurch gekennzeichnet, dass** die Messanordnung (28) ein optisches Triangulationsmessprinzip verwendet.

14. Verfahren zum Vermessen des Kompressionsdrucks eines Kompressionsstrumpfes oder einer Kompressionsbandage,
insbesondere unter Verwendung einer Vorrichtung (10) nach einem den vorangehenden Ansprüchen, umfassend die Schritte:
a) Positionieren einer Kompressionsbandage (B) an einem Expansionskörper (22);
b) Vorgeben einer Größe von einer auf den Expansionskörper (22) einwirkenden Expansionskraft und einem Umfang der Kompressionsbandage (B);
c) Variieren der Expansionskraft bei gleichzeitigem Überwachen der vorgegebenen Größe; und
d) Ermitteln der jeweils anderen Größe von auf den Expansionskörper (22) einwirkenden Expansionskraft und Umfang der Kompressionsbandage (B) nach Erreichen der vorgebebenen Größe,
**dadurch gekennzeichnet, dass** zum Variieren der Expansionskraft ein innerhalb des Expansionskörpers (22) vorherrschendes Druckniveau mittels einer Expansionsanordnung (44) eingestellt wird.

15. Verfahren nach Anspruch 14,
**dadurch gekennzeichnet, dass** die Schritte b) bis d) wenigstens einmal zyklisch wiederholt werden, wobei der Betrag der vorgegebenen Größe in Schritt b) vor der wenigstens einen zyklischen Wiederholung variiert wird.

16. Verfahren nach Anspruch 14 oder 15,
**dadurch gekennzeichnet, dass** in Schritt d) eine mehrfache Messung der zu ermittelnden Größe ausgeführt wird und daraus ein Mittelwert gebildet wird.

17. Verfahren nach einem der Ansprüche 14 bis 16,
**dadurch gekennzeichnet, dass** die vorgegebene Größe die auf den Expansionskörper (22) einwirkende Expansionskraft und die zu ermittelnde Größe der Umfang der Kompressionsbandage (B) ist, und dass in Schritt d) wenigstens ein radialer Abstand zwischen einem Punkt (Pᵢ) auf der Umfangsfläche des Expansionskörpers (22) und/oder der daran positionierten Kompressionsbandage (B) und einer zentralen Längsachse (L) des Expansionskörpers ermittelt wird.

18. Verfahren nach Anspruch 17,
**dadurch gekennzeichnet, dass** in Schritt d) eine Mehrzahl von radialen Abständen ermittelt wird, und dass zum Ermitteln des radialen Abstandes eine Messanordnung (28) verwendet wird, wobei die Messanordnung (28) und die Einheit von Expansionskörper und daran positionierter Kompressionsbandage (B) um vorbestimmte Winkelbeträge (a) relativ zueinander rotiert werden.

19. Verfahren nach Anspruch 17 oder 18,
**dadurch gekennzeichnet, dass** in Schritt d) eine Mehrzahl von radialen Abständen ermittelt wird, und dass zum Ermitteln des Umfangs segmentweise zumindest eine Teillänge (Iᵢ) eines Kreisbogens (K) berechnet wird, der von wenigstens drei der bezüglich ihres radialen Abstandes vermessenen Punkten (Pᵢ) aufgespannt wird.

## Claims

1. A device (10) for measuring the compression pressure of compression stockings or compression bandages, comprising
- an expansion body (22) which extends essentially along a central longitudinal axis (L), at which a compression bandage (B) may be positioned at least in portions, and which is adapted to expand and contract together with the compression bandage (B) under varying cross-section dimensions;
- an expansion arrangement (44) which is adapted to generate an expansion force for varying the cross-section dimensions of the expansion body (22), and
- at least one measuring arrangement (28) which is adapted to determine the varying cross-section dimensions of the expansion body (22) and a compression bandage (B) positioned thereon,
wherein the device (10) is adapted to establish a relationship between a predominant expansion force and the associated determined cross-section dimensions on the basis of the determined cross-section dimensions, **characterised in that** the expansion arrangement (44) is adapted to adjust a predominant pressure level within the expansion body (22) for the generation of expansion forces.

2. The device (10) according to Claim 1,
**characterised in that** the device (10) uses the expansion force as a control parameter and determines the cross-section dimensions prevailing at a certain expansion force by means of the measuring arrangement (28).

3. The device (10) according to Claim 1,
**characterised in that** the expansion body (22) may be filled with a gaseous medium and that the expansion arrangement (44) is adapted to adjust the pressure of this medium.

4. The device (10) according to one of the previous claims,
**characterised in that** the measuring arrangement (28) is adapted to determine at least one radial distance between the central longitudinal axis (L) and a point (Pᵢ) on a circumferential surface of the expansion body (22) and/or a compression bandage (B) arranged thereon.

5. The device (10) according to Claim 4,
**characterised in that** the measuring arrangement (28) is adapted to determine a plurality of radial distances within at least one cross-sectional plane along the circumference of the expansion body (22), wherein the device is adapted to calculate the circumference of the expansion body (22) and/or a compression bandage (B) arranged thereon from this plurality.

6. The device (10) according to Claim 5,
**characterised in that** for calculating the circumference, at least one partial length (Iᵢ) of a circular arc (K) is calculated segmentally, which is defined by at least three of the points (Pᵢ) which have been measured in respect of their radial distances.

7. The device (10) according to one of the previous claims,
**characterised in that** the measuring arrangement (28) and the expansion body (22) are rotatable relative to each other about the central longitudinal axis (L).

8. The device (10) according to one of the previous claims,
**characterised in that** the measuring arrangement (28) and the expansion body (22) are displaceable relative to each other along the central longitudinal axis (L).

9. The device (10) according to one of the previous claims,
**characterised in that** the device (10) comprises several measuring units (36) which are arranged in defined positions along the central longitudinal axis (L).

10. The device (10) according to one of the previous claims,
**characterised in that** the device (10) is adapted to determine the variable cross-section dimensions in a plurality of cross-sectional planes.

11. The device (10) according to one of the previous claims,
**characterised in that** the measuring arrangement (28) is arranged within the expansion body.

12. The device (10) according to one of the previous claims,
**characterised in that** the expansion body (22) is formed as a hose-shaped balloon and the expansion arrangement (44) comprises a compressed air system.

13. The device (10) according to one of the previous claims,
**characterised in that** the measuring arrangement (28) utilises an optical triangulation measuring principle.

14. A method for measuring the compression pressure of a compression stocking or a compression bandage,
in particular using a device (10) according to one of the previous claims, comprising the steps of:
a) positioning a compression bandage (B) on an expansion body (22);
b) specifying a parameter of an expansion force acting on the expansion body (22) and a circumference of the compression bandage (B);
c) varying the expansion force, while simultaneously monitoring the specified parameter; and
d) determining the respective other parameter of the expansion force acting on the expansion body (22) and the circumference of the compression bandage (B) after reaching the specified parameter,
**characterised in that** for varying the expansion force, a predominant pressure level within the expansion body (22) is adjusted by means of an expansion arrangement (44).

15. The method according to Claim 14,
**characterised in that** steps b) to d) are repeated cyclically at least once, wherein the amount of the specified parameter in step b) is varied before the at least one cyclic repetition.

16. The method according to Claim 14 or 15,
**characterised in that** multiple measurements of the parameter to be determined are carried out in step d) and a mean value is formed therefrom.

17. The method according to one of Claim 14 to 16,
**characterised in that** the specified parameter is the expansion force acting on the expansion body (22) and the parameter to be determined is the circumference of the compression bandage (B), and that at least one radial distance between a point (Pᵢ) on the circumferential surface of the expansion body (22) and/or the compression bandage (B) positioned thereon and a central longitudinal axis (L) is determined in step d).

18. The method according to Claim 17,
**characterised in that** a plurality of radial distances is determined in step d), and that for determining the radial distance a measuring arrangement (28) is used, wherein the measuring arrangement (28) and the unit of expansion body and compression bandage (B) positioned thereon are rotated relative to each other through predetermined angle values.

19. The method according to Claim 17 or 18,
**characterised in that** a plurality of radial distances is determined in step d), and that for calculating the circumference, at least one partial length (Iᵢ) of a circular arc (K) is calculated segmentally, which is defined by at least three of the points (Pᵢ) which have been measured in respect of their radial distances.

## Revendications

1. Dispositif (10) pour mesurer la pression de contention de bas de contention ou de bandages de contention,
comprenant
- un corps d'expansion (22) s'étendant sensiblement le long d'un axe longitudinal central (L), sur lequel un bandage de contention (B) peut être positionné au moins dans certaines zones et qui est conçu pour s'expandre et se contracter conjointement avec le bandage de contention (B) en présentant des dimensions de section transversale variables ;
- un moyen d'expansion (44) conçu pour produire une force d'expansion servant à modifier les dimensions de section transversale du corps d'expansion (22), et
- au moins un moyen de mesure (28) conçu pour déterminer les dimensions de section transversale variables du corps d'expansion (22) et/ou d'un bandage de contention (B) positionné dessus,
dans lequel le dispositif (10) est conçu pour déterminer, à partir des dimensions de section transversale déterminées, une relation entre une force d'expansion régnante et les dimensions de section transversale déterminées associées, **caractérisé en ce que** le moyen d'expansion (44) est conçu pour régler un niveau de pression régnant à l'intérieur du corps d'expansion (22) en vue de produire des forces d'expansion.

2. Dispositif (10) selon la revendication 1,
**caractérisé en ce que** le dispositif (10) utilise la force d'expansion comme grandeur de commande et détermine, au moyen du moyen de mesure (28), les dimensions de section transversale présentes pour une force d'expansion déterminée.

3. Dispositif (10) selon la revendication 1,
**caractérisé en ce que** le corps d'expansion (22) peut être rempli d'un milieu gazeux et le moyen d'expansion (44) est conçu pour régler la pression de ce milieu.

4. Dispositif (10) selon l'une des revendications précédentes,
**caractérisé en ce que** le moyen de mesure (28) est conçu pour déterminer au moins une distance radiale entre l'axe longitudinal central (L) et un point (Pᵢ) sur une surface circonférentielle du corps d'expansion (22) et/ou d'un bandage de contention (B) disposé dessus.

5. Dispositif (10) selon la revendication 4,
**caractérisé en ce que** le moyen de mesure (28) est conçu pour déterminer, dans au moins un plan de section transversale, une pluralité de distances radiales le long de la circonférence du corps d'expansion (22), le dispositif étant conçu pour calculer la circonférence du corps d'expansion (22) et/ou d'un bandage de contention (B) disposé dessus à partir de cette pluralité.

6. Dispositif (10) selon la revendication 5,
**caractérisé en ce que** pour calculer la circonférence, on calcule, segment par segment, au moins une longueur partielle (Iᵢ) d'un arc de cercle (K) qui est défini par au moins trois des points (Pᵢ) mesurés par rapport à leur distance radiale.

7. Dispositif (10) selon l'une des revendications précédentes,
**caractérisé en ce que** le moyen de mesure (28) et le corps d'expansion (22) peuvent tourner l'un par rapport à l'autre autour de l'axe longitudinal central (L).

8. Dispositif (10) selon l'une des revendications précédentes,
**caractérisé en ce que** le moyen de mesure (28) et le corps d'expansion (22) sont déplaçables l'un par rapport à l'autre le long de l'axe longitudinal central (L).

9. Dispositif (10) selon l'une des revendications précédentes,
**caractérisé en ce que** le dispositif (10) comprend plusieurs unités de mesure (36) qui sont disposées à des positions définies le long de l'axe longitudinal central (L).

10. Dispositif (10) selon l'une des revendications précédentes,
**caractérisé en ce que** le dispositif (10) est conçu pour déterminer les dimensions de section transversale variables dans une pluralité de plans de section transversale.

11. Dispositif (10) selon l'une des revendications précédentes,
**caractérisé en ce que** le moyen de mesure (28) est disposé à l'intérieur du corps d'expansion.

12. Dispositif (10) selon l'une des revendications précédentes,
**caractérisé en ce que** le corps d'expansion (22) est réalisé sous la forme d'un ballon en forme de tuyau et le moyen d'expansion (44) comprend un système à air comprimé.

13. Dispositif (10) selon l'une des revendications précédentes,
**caractérisé en ce que** le moyen de mesure (28) utilise un principe de mesure optique par triangulation.

14. Procédé pour mesurer la pression de contention d'un bas de contention ou d'un bandage de contention,
notamment en utilisant un dispositif (10) selon l'une des revendications précédentes, comprenant les étapes consistant à :
a) positionner un bandage de contention (B) sur un corps d'expansion (22) ;
b) prédéfinir une grandeur d'une force d'expansion agissant sur le corps d'expansion (22) et d'une circonférence du bandage de contention (B) ;
c) faire varier la force d'expansion en surveillant simultanément la grandeur prédéfinie ; et
d) déterminer l'autre grandeur respective de la force d'expansion agissant sur le corps d'expansion (22) et de la circonférence du bandage de contention (B) après atteinte de la grandeur prédéfinie,
**caractérisé en ce qu'**un niveau de pression régnant à l'intérieur du corps d'expansion (22) est réglé au moyen d'un moyen d'expansion (44) pour faire varier la force d'expansion.

15. Procédé selon la revendication 14,
**caractérisé en ce que** les étapes b) à d) sont répétées cycliquement au moins une fois en faisant varier la valeur de la force prédéfinie à l'étape b) avant ladite au moins une répétition cyclique.

16. Procédé selon la revendication 14 ou 15,
**caractérisé en ce qu'**à l'étape d), une mesure multiple de la grandeur à déterminer est effectuée et une valeur moyenne est formée à partir de celle-ci.

17. Procédé selon l'une des revendications 14 à 16,
**caractérisé en ce que** la grandeur prédéfinie est la force d'expansion agissant sur le corps d'expansion (22), et la grandeur à déterminer est la circonférence du bandage de contention (B), et **en ce qu'**à l'étape d) au moins une distance radiale entre un point (Pᵢ) sur la surface circonférentielle du corps d'expansion (22) et/ou du bandage de contention (B) positionné dessus et un axe longitudinal central (L) du corps d'expansion est déterminée.

18. Procédé selon la revendication 17,
**caractérisé en ce qu'**à l'étape d) une pluralité de distances radiales est déterminée, et qu'un moyen de mesure (28) est utilisé pour déterminer la distance radiale, le moyen de mesure (28) et l'unité formée par le corps d'expansion et le bandage de contention (B) positionné dessus étant tournés l'un par rapport à l'autre de valeurs angulaires prédéterminées (a).

19. Procédé selon la revendication 17 ou 18,
**caractérisé en ce qu'**à l'étape d) une pluralité de distances radiales est déterminée, et que pour déterminer la circonférence, segment par segment, on calcule au moins une longueur partielle (Iᵢ) d'un arc de cercle (K) qui est défini par au moins trois des points (Pᵢ) mesurés en ce qui concerne leur distance radiale.
